(19) Europäisches Patentamt
European Patent Office
Office européen des brevets

(11) EP 1 580 211 A1

(12) EUROPEAN PATENT APPLICATION

(43) Date of publication:
**28.09.2005 Bulletin 2005/39**

(51) Int Cl.[7]: **C08G 73/02**

(21) Application number: **05006289.2**

(22) Date of filing: **22.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **22.03.2004 KR 2004019312**
**05.03.2005 KR 2005018409**

(71) Applicants:
- **Yoon, Ho-Sung**
**Gyeonggi-do 463-766 (KR)**
- **LEE, Suck-Hyun**
**Gyeonggi-do, 427-010 (KR)**

(72) Inventors:
- **Lee, Suck-Hyun**
**Gwacheon-si, Gyeonggi-do 427-010 (KR)**
- **Lee, Chan-Woo**
**Suwon-si, Gyeonggi-do 443-370 (KR)**
- **Yoon, Ho-Sung**
**Seongnam-si, Gyeonggi-do 463-766 (KR)**

(74) Representative: **Viering, Jentschura & Partner**
**Patent- und Rechtsanwälte,**
**Steinsdorfstrasse 6**
**80538 München (DE)**

(54) **Polyaniline having high electrical conductivity and producing process thereof**

(57) The present invention relates to a polyaniline which has highly enhanced electrical conductivity and method of producing the polyaniline. The polyaniline forms characteristic identifiable peaks at around 140 ppm and at least one single peak at about 123 ppm and 158 ppm in $^{13}C$ CMPAS NMR spectrum analysis. The polyaniline according to the present invention has electrical conductivity 100 times high as the conventional ones, and therefore, it may be utilized in conductive film, fiber, polymeric blends, electro-magnetic interference, and transparent electrode of thin film.

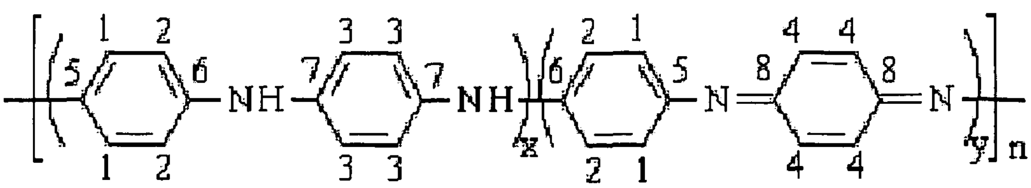

benzenoid ring
(phenylene diamine)

quinoid ring
(quinone diimine)

FIG. 1



Printed by Jouve, 75001 PARIS (FR)

## Description

This application claims the benefit of Korean Patent Applications No. 2004-19312, filed on March 22, 2004 in Korea, and 2005-18409, filed on March 5, 2005 in Korea, which are herein incorporated by reference for all purposes as if fully set forth herein.

## BACKGROUND OF THE INVENTION

### Field of the Invention

The present invention relates to a polyaniline, and more particularly to a polyaniline which has an enhanced electrical conductivity and process of producing the polyaniline.

### Discussion of the Related Art

Conductive polymers have conjugated structures along double bonds present in the backbone thereof and has much enhanced electrical conductive properties compared to other organic materials because the conductive polymers forms partial electrical charges along the conjugate structures and thereby having unlocalized electrons when the polymers are doped with dopants such as a protonic acid. Because the conductive polymers have both enhanced electrical, magnetic or optical properties comparable with conventional metals and satisfactory mechanical properties and processability as conventional polymers, they have been remarkably attracted in the filed of chemistry, physics, material engineering and industries.

The first developed conductive polymer is polyacetylene, which was developed Shirakawa et al., however, polyacetylene is oxidized easily in the air. After polyacetylene was developed, conductive polymers such as polyaniline, polypyrrole, and polythiophene have been developed.

The conductive polymers can be used in various applications according to their electrical conductivity. For example, the conductive polymers with electrical conductivity of $10^{-13}$ ~ $10^{-7}$ (S/cm), $10^{-6}$ ~ $10^{-2}$ (S/cm), and equal to and more than $10^{\circ}$ (S/cm), respectively have been used as antistatic materials, static discharge materials, and electromagnetic interference(EMI) shielding materials, battery electrodes, semiconductor and solar cells. Accordingly, the conductive polymers may be utilized in more various applications by improving their electrical conductivities.

Among intrinsically conducting polymers, polyaniline has been noticed in the relevant technical field since it is not only cheap and stable compared to polypyrrole and polythiophene also doped easily by protonic acid.

The polyaniline (PANI) can be classified into the completely reduced from, leucoemeraldine, the intermediated oxidized form, emeraldine, and the fully oxidized form, pemigraniline, according to its oxidation state.

However, the polyaniline produced through the conventional processes, especially the polyaniline as the completely reduced from, leucoemeraldine and the fully oxidized form, pernigraniline, has disadvantages that it cannot be made from melting process owing to its high boiling point and that it must experience complex processing steps since it has low solubility in solvents with high-boiling point or universal or compatible solvents such as meta-cresol.

Various trials have been done in order to improve the problems as indicated above of the conductive polymers. For example, conductive polymer derivatives or copolymers such as graft copolymers have been synthesized by introducing side chains into the functional groups such as amine group or benzene rings of the conductive polymers for improving solubility of the conductive polymers. Alternatively, various dopants, or other organic materials, polymers or plasticizers have been added for improving the processability and the electrical conductivity of the conductive polymers. However, it was certified that those composites had much deteriorated electrical conductivity compared to the conductive polymers prior to reforming.

Polyaniline (PANI) can be synthesized either by electro-chemical charge transfer reaction which uses electrochemical or redox reaction, or by chemical oxidation process that uses protonation through acid-base reaction. However, it has been known that the chemical oxidation process is suitable for producing polyaniline in industrial scales.

Representative chemical oxidation process for producing polyaniline has been reported to MacDiarmid et al., who synthesized polyaniline by polymerizing aniline monomers dissolved in hydrochloric acid with oxidizing agents such as ammonium persulfate in aqueous solution in the temperature of 1 ~ 5 °C, separating and washing the precipitates and then obtaining polyaniline (See A.G. MacDiarmid, J.C. Chiang, A.F. Richter, N.L.D. Somarisi, in L. Alcacer (ed.), Conducting Polymers, Special Applications, Reidel, Dordercht, 1987, p. 105). The MadDiarmid process has been utilized widely and regarded as a standard method for producing polyaniline.

The emeraldine base (EB) synthesized according to the MacDiarmid process had low molecular weight (intrinsic viscosity 0.8 ~ 1.2 dl/g), but it was dissolved in 1-methyl-2-pyrrolidon (NMP). Also it reported that emeraldine salt doped with 10-camphorsulfonic acid (ES-CSA) was dissolved a little in meta-cresol. The film manufactured from that solution containing ES-CSA had maximal electrical conductivity of about 100 S/cm, on the other hand, the film

made from emeraldine salt doped with hydrochloric acid (ES-HCl) showed highly lower electrical conductivity of about 5 S/cm. Especially, the polyaniline synthesized according to the MacDiarmid process had lower molecular weight, broad molecular weight distribution, and inferior solubility to solvents or electrical conductivity resulted from side chain addition reactions to the backbone.

U.S. patents No. 5,264, 552 and 5,728,312 to Abe et al., which are incorporated herein by reference, teach processes for synthesizing a polyaniline by using protonic acid with acid dissociation constant (PKa) of less than 4.8, for example hydrofluoric acid, hydrofluorophosphoric acid, or perchloric acid, as dopants. The synthesized polyaniline was a block-type polyaniline which had separated quinonediimine blocks from phenylenediamine blocks in backbone and had reduced intermolecular hydrogen bonds in micro-structure. As a result, the synthesized polyaniline by Abe et al. had much improved processability. However, polyaniline produced according to Abe et al. has much irregular oxidation state compared to the MacDiarmid process, and therefore the polyaniline has low electrical conductivity.

U.S. patent No. 6,303,053 to Akita et al., which is incorporated herein by reference, discloses a process of synthesizing a meta-type polyaniline by polymerizing aniline monomers with at least one substitution group on the benzene ring at pH 7. Since the polyaniline synthesized according to Akita et al. is connected through meta-position among repeating units, it has flexible molecular structure and lower molecular weight, and therefore, it has elevated proton conductivity enough to be used as electrolyte in fuel cell. However, since the meta-type polyaniline disclosed in Akita et al. lacks linearity, which causes electron transport to be difficult, the meta-type polyaniline does not have to do with enhanced electrical conductivity.

According to Beadel et al., the polyaniline produced by the standard synthesizing method disclosed in MacDiarmid as described above has higher electrical conductivity as it has higher molecular weight and it needs to be reacted or polymerized at lower temperature in order to have higher molecular weight (See Beadel et al., Synth. Met. 95, 29 ~ 45, 1998). For lowering reaction temperature, when aniline monomer is polymerized in homogeneous solution system, metallic salts such as LiCl, $CaF_2$ and the likes are usually added to the system in order to prevent the system from freezing. However, mixing those metallic salts with the solution system causes the reaction to be slow, that is to say, at least 48 hours to complete the polymerizing reaction, and therefore, it is difficult to control the polymerization reaction. Also, as lowering the reaction temperature, the synthesized polyaniline has increased molecular weight as well as molecular weight distribution (polydispersity of equal to or more than 2.5).

Also, $FeCl_2$ as an oxidizing agent is added during polymerization reaction in order to inhibit formations of side chains in polyaniline, or the polyaniline is extracted with organic solvents for removing side products such as oligomers which have quitted synthesizing during the polymerization reaction. Besides, since the monomers are added on the ortho- positions as much as the para- positions of the benzene ring in the polyaniline backbone in case of emulsion polymerization or interfacial polymerization, such synthesized polyaniline has much side chains, which cause the polyaniline to be low electrical conductivity and solubility.

According to Thyssen et al. there is a probability of about 10% of the ortho coupling, which induces side chains in the backbone of the polymers, when the aniline monomers are polymerized by using electro-chemical process (See Thyssen et al., Synth. Met. 29, E357 ~ E362, 1989). Such polymers synthesized by ortho- coupling have lower hydrodynamic dimensions, which results in decreased intrinsic viscosity, compared to polymers synthesized by para- coupling. In other words, the polymers synthesized by ortho-coupling have much side chains with resultant higher molecular weights even though they have low intrinsic viscosity of equal to or less than 1.2 dl/g. As a result, the polymers synthesized by ortho- coupling have inferior processability without improving the electrical conductivity.

In addition to the patents described above, many researches were reported for improving physical or chemical properties, for example electrical conductivity of the conductive polymers (See Organic Conductive molecules and Polymers, Vol. I - IV, Ed. By H. S. Nalwa, John Wiley & Sons, New York, 1997; Handbook of Conducting Polymers Vol. I, II, Ed. By Skotheim et al., Marcel Dekker, New York, 1998; Conductive Polymers, P. Chandrssekhar, Kluwer Acade. Pub. Boston, 1999).

To date, polyaniline has commonly maximal electrical conductivity of about 100 S/cm. Further, polyaniline synthesized by reacting monomers for 16 hours at -43 °C has maximal electrical conductivity of about 320 S/cm according to Beadle et al. (Synth. Met. 95, 29~45, 1998). However, In case of synthesizing the polyaniline at lower temperatures, it is difficult to control the polymerization reaction and the synthesized polyaniline has a wide range of molecular weight distribution, as mentioned above.

The synthetic conductive polymers, especially polyaniline has much lower real electrical conductivity than theoretically calculated electrical conductivity, about $10^5$ ~ $10^6$ S/cm, because they do not have fully linear form and form completely orders such as crystalline structure (See Kohlamn et al., Phys. Rev. Lett. 78(20), 3915, 1997). Since such polymers with lower electrical conductivity cannot be utilized as transparent plastic electrode or EMI shielding materials, there still remain needs of development of polyaniline having much improved electrical conductivity in the related field.

## SUMMARY OF THE INVENTION

Accordingly, the present invention is directed to polyaniline with much enhanced electrical conductivity and process for producing the polyaniline that substantially obviates one or more of problems due to limitations and disadvantages of the related art.

An advantage of the present invention is to provide a polyaniline that has maximally 100 times high electrical conductivity as the conventional polyaniline.

Another advantage of the present invention is to provide a polyaniline synthesizing process that requires inexpensive procedures, is able to be controlled conveniently, and that causes the polymers to have high electrical conductivity.

Additional features and advantages of the invention will be set forth in the description which follows, and in part will be apparent from the description, or may be learned by practice of the invention. These and other advantages of the invention will be realized and attained by the structure particularly pointed out in the written description and claims hereof as well as the appended drawings.

To achieve these and other advantages and in accordance with the purpose of the present invention, as embodied and broadly described, in one aspect, the present invention provides a polyaniline having a repeat unit represented by the formula below, wherein the polyaniline has at least one single peak at about 123 ppm of chemical shift and at about 158 ppm of chemical shift in a $^{13}C$ CPMAS NMR spectrum and/or has identifiable peaks at around 140 ppm of chemical shift in a $^{13}C$ CPMAS NMR spectrum.

[Formula]

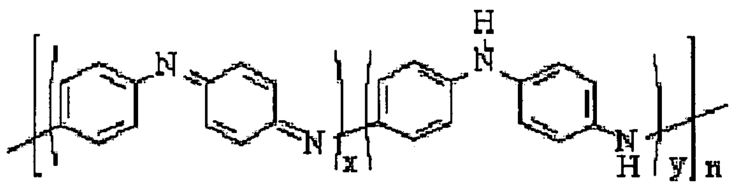

wherein x and y is respectively a molar fraction of a quinonediimine structural unit and phenylenediamine structural unit in the repeating unit, and $0 < x < 1$, $0 < y < 1$ and $x + y = 1$; and n is an integer of 2 or more.

It is characterized that the polyaniline of the present invention forms peaks at about 138 ppm of chemical shift and at about 143 ppm of chemical shift in a $^{13}C$ CPMAS NMR spectrum. Particularly, the polyaniline has a peak intensity at about 138 ppm of chemical shift ($I_{138}$) in the $^{13}C$ CPMAS NMR spectrum larger than a peak intensity at about 143 ppm of chemical shift ($I_{143}$) in the $^{13}C$ CPMAS NMR spectrum. Preferably, $I_{138} / I_{143}$ may be equal to or more than 1.2 in the $^{13}C$ CPMAS NMR spectrum.

In another aspect, the present invention provides a polyaniline having a repeat unit represented by the formula below, wherein the polyaniline has a peak intensity ratio, $I_{1496} / I_{1508}$, of equal to or less than 1 in a PAS spectrum, wherein $I_{1496}$ represents a peak intensity at wave length of about 1496 $cm^{-1}$ in the PAS spectrum and $I_{1508}$ represent a peak intensity at wave length of about 1508 $cm^{-1}$ in the PAS spectrum.

[Formula]

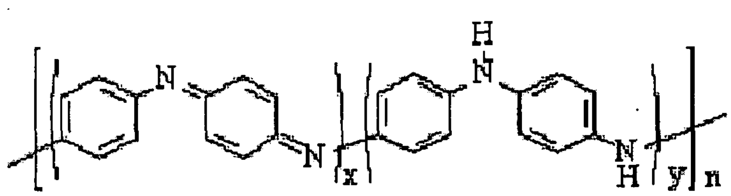

wherein x and y is respectively a molar fraction of a quinonediimine structural unit and phenylenediamine structural unit in the repeating unit, and $0 < x < 1$, $0 < y < 1$ and $x + y = 1$; and n is an integer of 2 or more.

The polyaniline of the present invention has a peak intensity ratio, $I_{833} / I_{1508}$. of equal to or more than 3.5 in a PAS spectrum, wherein $I_{833}$ represents a peak intensity at wave lengths between about 760 $cm^{-1}$ and about 875 $cm^{-1}$ in the PAS spectrum and $I_{1508}$ represents a peak intensity at wave lengths between about 1475 $cm^{-1}$ and about

1535 $cm^{-1}$ in the PAS spectrum.

In a further another aspect, the present invention provides a polyaniline having a repeat unit represented by the formula below, wherein the polyaniline has a Raman line intensity ratio, $I_{1346-1398}$ / $I_{1125-1205}$, of equal to or more than 0.6, wherein $I_{1346-1398}$ represents the Raman line intensity of a ring stretching vibration appearing at wave number between about 1346 $cm^{-1}$ and about 1398 $cm^{-1}$ and $I_{1125-1205}$ represents the Raman line intensity of a ring stretching vibration appearing at wave number between about 1125 $cm^{-1}$ and about 1205 $cm^{-1}$.

[Formula]

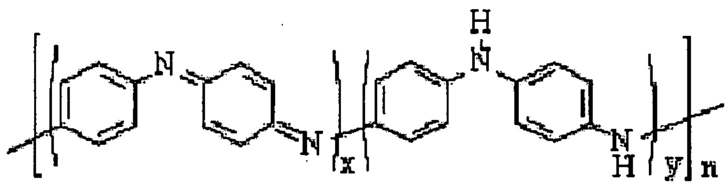

wherein x and y is respectively a molar fraction of a quinonediimine structural unit and phenylenediamine structural unit in the repeating unit, and $0 < x < 1$, $0 < y < 1$ and $x + y = 1$; and n is an integer of 2 or more.

In a further another aspect, the present invention provides a polyaniline having a repeat unit represented by the formula below, wherein the polyaniline has four major peaks between at about 139.5 ppm and at about 160 ppm of chemical shift in a solution state $^{13}C$ NMR spectrum in case the polyaniline is substituted with tert-butoxycarbonyl.

[Formula]

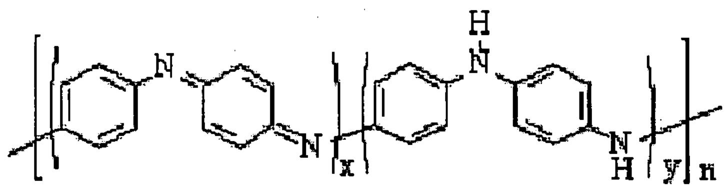

wherein x and y is respectively a molar fraction of a quinonediimine structural unit and phenylenediamine structural unit in the repeating unit, and $0 < x < 1$, $0 < y < 1$ and $x + y = 1$; and n is an integer of 2 or more.

The tert-butoxycarbonyl substituted polyaniline has no discernable peaks below 110 ppm of chemical shift and between at about 130 ppm of chemical shift and about 135 ppm of chemical shift in the solution state $^{13}C$ NMR spectrum. Besides, it is characterized that the substituted polyaniline of the present invention has weak or negligible peaks between at about 149 ppm of chemical shift and at about 152 ppm of chemical shift in the solution state $^{13}C$ NMR spectrum.

Especially, the substituted polyaniline has no more than 10 peaks corresponding to the chemical shift associated with protonated carbons of a benzenoid and quinoid rings in the solution state $^{13}C$ NMR spectrum. More particularly, the polyaniline substituted with tert-butoxycarbonyl has a peak intensity ratio, $I_{123}$ / $I_{125}$, of equal to or less than 0.2 in the solution state $^{13}C$ NMR spectrum, wherein $I_{123}$ represents a peak intensity between about 123 ppm and about 124 ppm of chemical shift in the solution state $^{13}C$ NMR spectrum and $I_{125}$ represent a peak intensity at about 125 ppm of chemical shift in the solution state $^{13}C$ NMR spectrum. Moreover, the polyaniline substituted with tert-butoxycarbonyl has no more than 2 side peaks within a distance of 1 ppm from a peak center at about 136 ppm of chemical shift and from a peak center at about 138 ppm of chemical shift in the solution state $^{13}C$ NMR spectrum.

In further another aspect, the present invention provides a process of producing polyaniline, the process comprising the steps of: (a) mixing an aniline monomer and acid solution with an organic solvent; (b) adding an oxidizing agent in a protonic acid into the acid solution to synthesize polyaniline doped with the protonic acid; and (c) dedoping the polyaniline with a base.

Preferably, the polyaniline produced according to the present invention has a structure represented by formula below.

[Formula]

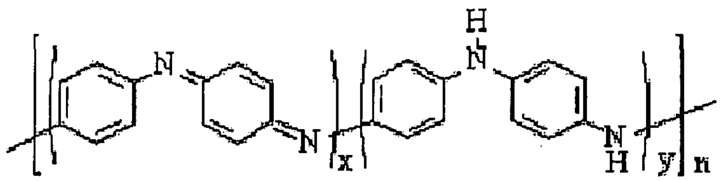

wherein x and y is respectively a molar fraction of a quinonediimine structural unit and phenylenediamine structural unit in the repeating unit, and $0 < x < 1$, $0 < y < 1$ and $x + y = 1$; and n is an integer of 2 or more.

Especially, the polyaniline produced according to the present invention has at least one single peak at about 123 ppm of chemical shift and at about 158 ppm of chemical shift in a $^{13}$C CPMAS NMR spectrum and/or has identifiable peaks at around 140 ppm of chemical shift in a $^{13}$C CPMAS NMR spectrum.

In relation to the present invention, the protonic acid is inorganic acid, and preferably, the inorganic acid may be selected from the group consisting of hydrochloric acid, nitric acid, sulfuric acid, phosphoric acid, hydrofluoric acid, or hydroiodic acid.

Also, the organic solvent used in the present invention comprises an aliphatic hydrocarbon unsubstituted or substituted with hydroxyl, halogen, oxygen or carboxyl group, an aromatic compound, or alicyclic compound. Moreover, the oxidizing agent of the present invention comprises ammonium persulfate, hydrogen peroxide, manganese dioxide, potassium dichromate, potassium iodate, ferric chloride, potassium permanganate, potassium bromate, potassium chlorate, or mixtures thereof.

Also, it is characterized that the present process may be performed in the temperature of between about -45 °C and about 45 °C, preferably between about -45 °C and about 5 °C, more preferably between about -40 °C and about 5 °C in synthesizing polyaniline.

Polyaniline synthesized according to the present invention has highly linear configuration, fewer side chains, and therefore highly improved electrical conductivity compared to polyaniline synthesized according to conventional process. Accordingly, polyaniline of the present invention may be used as various conductive films, fibers, coatings, blends with other polymers, battery electrodes, or material for organic semiconductors or organic device. Especially, polyaniline synthesized according to the present invention may be utilized as transparent electrodes, conductive etch mask layer or for anti-corrosion, absorbency of near infrared light since composites or composition comprising polyaniline of the present invention has highly improved electrical conductivity even though low contents of polyaniline.

It is to be understood that both the foregoing general description and the following detailed description are exemplary and explanatory and are intended to provide further explanation of the invention as claimed.

## BRIEF DESCRIPTION OF THE DRAWING

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a schematic formula showing a repeating unit of polyaniline with carbon numbers for describing its micro-chemical structure;

FIG. 2 shows a spectrum resulted from $^{13}$C CPMAS NMR analysis for highly conductive polyaniline (HCPANI) synthesized according to a preferred example of the present invention;

FIG. 3 shows a spectrum resulted from $^{13}$C CPMAS NMR analysis for polyaniline (PANI) synthesized according to a conventional process;

FIG. 4 shows a spectrum resulted from PAS analysis for highly conductive polyaniline (HCPANI) synthesized according to a preferred example of the present invention;

FIG. 5 shows a spectrum resulted from PAS analysis for polyaniline (PANI) synthesized according to a conventional process;

FIG. 6 shows a spectrum resulted from Raman spectroscopy analysis for highly conductive polyaniline (HCPANI) synthesized according to an preferable example of the present invention;

FIG. 7 shows a spectrum resulted from Raman spectroscopy analysis of polyaniline (PANI) produced according to a conventional process.

FIG. 8 shows a spectrum resulted from $C^{13}$ NMR analysis for polyaniline synthesized according to the preferred example of the present invention;

FIG. 9 shows a spectrum resulted from $C^{13}$ NMR analysis for commercially available polyaniline (Ald-PANI).

FIG. 10 shows a spectrum between 140 ppm and 110 ppm resulted from $C^{13}$ NMR analysis for polyaniline (PANI) produced according to a conventional process; and

FIG. 11 shows a spectrum between 165 ppm and 135 ppm resulted from $C^{13}$ NMR analysis for polyaniline (PANI) produced according to a conventional process.

**DETAILED DESCRIPTION OF THE ILLUSTRATED EMBODIMENTS**

The conductive polyaniline synthesized according to the present invention is produced by introducing anline monomers into reaction system that comprises acidic aqueous solution and organic solvent and then polymerizing the monomers by chemical oxidation in various reaction temperatures from -45 °C to 45 °C. Such synthesized polyaniline is treated with a base to give rise to producing emeraldine base (EB) form, which has a structure formula below.

[Formula]

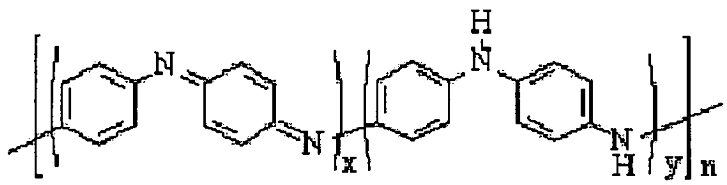

wherein x and y is respectively a molar fraction of a quinonediimine structural unit and phenylenediamine structural unit in the repeating unit, and $0 < x < 1$, $0 < y < 1$ and $x + y = 1$; and n is an integer of 2 or more.

The above polyaniline of EB form synthesized according to the present invention has maximally 100 times enhanced electrical conductivity as the polyaniline synthesized by using the conventional method. Hereinafter, the highly conductive polyaniline of EB form synthesized according to the preferred examples of the present invention will be frequently referred to as "HCPANI" while the polyaniline of EB form synthesized according to the conventional method will be referred to as "PANI" without indicated otherwise.

It is only known that the polyaniline of EB form synthesized according to the conventional method has a fraction ratio of x to y in formula above of about 1:1. In other words, the microstructure of the polyaniline has not been fully discovered. On the other hands, HCPANI, which has highly enhanced electrical conductivity and is synthesized according to the present invention, has remarkably characteristic chemical microstructure compared to the conventional PANI. The differences in chemical structure between the HCPANI and PANI will be more described in more detail referring the appended drawings.

FIG. 1 is a schematic formula showing a repeating unit of polyaniline with carbon numbers for describing its micro-chemical structure. FIG. 2 shows a spectrum resulted from $^{13}C$ CPMAS NMR analysis for highly conductive polyaniline (HCPANI) synthesized according to a preferred example of the present invention. FIG. 3 shows a spectrum resulted from $^{13}C$ CPMAS NMR analysis for polyaniline (PANI) synthesized according to a conventional process.

As shown in FIGS. 2 or 3, HCPANI, which synthesized according to the present invention, has two apparent separated peaks around 140 ppm of chemical shift, that is one peak at about 138 ppm ($I_{138}$) and the other peak at about 143 ppm ($I_{143}$) in $^{13}C$ CPMAS (Cross-Polarized Magnetic-Angle-Spinning) NMR spectrum (FIG. 2). On the other hand, PANI has blurring multiple peaks at around 140 ppm in $^{13}C$ CPMAS NMR spectrum (FIG. 3).

According to Raghunathan et al., the two peaks ($I_{138}$ and $I_{143}$ in FIG. 2) at around 140 ppm of chemical shift in $^{13}C$ CPMAS NMR analysis of the polyaniline of EB form corresponds to protonated carbons connected to hydrogen of quinoid ring in repeating unit of polyaniline of EB from shown in FIG. 1 (Raghunathan et al., Synth. Met. 81, 39 ~ 47, 1996; Yasuda et al., Synth. Met. 61,239 ~ 245, 1993).

However, it is difficult to certify specific peaks at around 140 ppm in $^{13}C$ CPMAS NMR spectrum of the PANI synthesized according to the conventional method because there are many small peaks at around 140 ppm of chemical shift as shown in FIG. 3. On the other hand, it was determined that the HCPANI synthesized according to the present invention has two or more apparently confirmable peaks, $I_{143}$ and $I_{138}$, a shoulder at around 140 ppm of chemical shift in $^{13}C$ CPMAS NMR spectrum as shown in FIG. 2. Besides, it was determined that the HCPANI had higher peak intensity at about 138 ppm of chemical shift than peak intensity at about 143 ppm of chemical shift in $^{13}C$ CPMAS NMR spectrum ($I_{138} > I_{143}$). That relationship between peak intensities at specific chemical shifts in $^{13}C$ CPMAS NMR analysis is one characteristic of HCPANI synthesized according to the present invention, which is remarkably different from

peak forms in $^{13}C$ CPMAS NMR spectrum for PANI synthesized according to the conventional method.

HCPANI synthesized according to the present invention has two noticeably confirmable peaks at about 140 ppm in $^{13}C$ CPMAS NMR spectrum, because the quinoid ring (quinonediimine structural unit) in the repeating unit of HCPANI in FIG. 1 is connected through immine bonds and thereby not being able to rotate and having bended form of -N= bonding instead of maintaining linear form. Therefore, 4 carbon atoms (C4) on the quinoid ring shown in FIG. 1 lose equivalences. Accordingly, we may infer that HCPANI synthesized according to the present invention has nearly theoretically ideal structure of polyaniline as shown formula above. On the other hand, since PANI synthesized according to conventional method has defects in quinoid ring, PANI has different structure from the structure of formula above. Accordingly, it is difficult to certify specific peaks at around 140 ppm of chemical shift in $^{13}C$ CPMAS NMR spectrum of PANI, which has many indistinguishable peaks around 140 ppm.

Wei et al. reported that Michael addition reaction of aniline monomer might be happened on the quinoid ring as shown below. Therefore, we think that PANI has other micro-chemical structures than HCPANI.

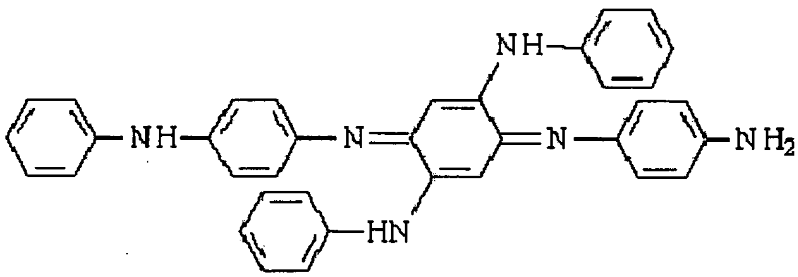

Further, HCPANI synthesized according to the present invention has a single or unique peak at about 123 ppm of chemical shift or about 158 ppm of chemical shift in $^{13}C$ CPMAS NMR spectrum as shown in FIG. 2. On the other hand PANI synthesized according to the conventional method shows 2 or more unidentifiable peaks at about 123 ppm of chemical shift and at about 158 ppm of chemical shift $^{13}C$ CPMAS NMR spectrum as shown in FIG. 3

In relation to the differences of peak formation between HCPANI and PANI in $^{13}C$ CPMAS NMR spectrum, a single peak at about 123 ppm of chemical shift in $^{13}C$ CPMAS NMR spectrum corresponds to carbon atoms C1 and C2 of benzenoid ring (phenylenediamine structural unit), which may be rotated a bit in molecules, of the repeating unit of polyaniline in FIG. 1. HCPANI had an equivalent unique or single peak at about 123 ppm in $^{13}C$ CPMAS NMR spectrum (FIG. 2), while PANI showed divided peaks, not unique peak, at about 123 ppm in $^{13}C$ CPMAS NMR spectrum (FIG. 3).

In other words, it is certified that HCPANI of the present invention has equivalent carbon atoms in benzenoid ring, while PANI does not have equivalent carbon atoms in benzenoid ring.

Yasuda et al., synthesized polyaniline by adopting Cao et al. (Cao et al., Polymer, 30, 2305, 1989) with using $FeCl_3$ instead of ammonium persulfate which is commonly used in conventional chemical oxidation method for producing polyaniline (See Yasuda et al., Synth. Met. 61, 239 ~ 245, 1993). However, solid state polyaniline synthesized according to Yasuda et al. did not have distinguishable peak, but had only indistinguishable small peaks, at about 138 ppm of chemical shift in $^{13}C$ CPMAS NMR spectrum, and showed the peak intensity at about 138 ppm of chemical shift was lower than the peak intensity at about 143 ppm of chemical shift.

In other words, conventional PANI has many indistinguishable small peaks at about 138 ppm of chemical shift in $^{13}C$ CPMAS NMR analysis, and the peak intensity at about 138 ppm is weaker than the peak intensity at about 143 ppm of chemical shift. On the other hand, HCPANI synthesized according to the present invention has two or more noticeably distinguished peaks at around 140 ppm in $^{13}C$ CMPAS NMR analysis. HCPANI synthesized according to the present invention has few defects at carbons on the quinoid rings of repeating units of polyaniline and aniline monomers is bonded through para- coupling in polymerization. Such differences in micro-chemical structures cause HCPANI to having much higher electrical conductivity compared to conventional PANI.

Also, HCPANI synthesized according to the present invention has noticeably spectrum in PAS analysis. FIG. 4 shows a spectrum resulted from PAS (Photo Acoustic Spectroscopy) analysis for highly conductive polyaniline (HCPANI) synthesized according to a preferred example of the present invention, and FIG. 5 shows a spectrum resulted from PAS analysis for polyaniline (PANI) synthesized according to the conventional process. It is generally known that surface morphology of samples has a little effect on absorbency of samples, but does not have to do with photometry of samples in PAS analysis. The analytical results shown in FIGS. 4 and 5 were obtained by treating the powder forms in the same analytical conditions and then comparing quantitatively the infrared absorbencies.

Among infrared absorption peaks of PAS spectrum in FIGS. 4 and 5, the peaks at about 1500 $cm^{-1}$ of wavelength are assigned to the ring stretching vibration of the benzenoid ring (1508 $cm^{-1}$) and the quinoid ring (1593 $cm^{-1}$)

in the repeating unit of polyaniline. The HCPANI powder had different infrared absorption peaks at about 1500 $cm^{-1}$ wavelength than the PANI powder synthesized according to the conventional method. HCPANI synthesized according to the present invention had peak intensity at about 1496 $cm^{-1}$ wavelength ($I_{1496}$), which is weaker than peak intensity at about 1508 $cm^{-1}$ wavelength ($I_{1508}$) in PAS spectrum, that is, the peak intensity ratio of $I_{1496}$ to $I_{1508}$ is less than 1, as shown in FIG. 4. On the other hand, in case of PANI, the peak intensity at about 1500 $cm^{-1}$ wavelength is stronger than the peak intensity at about 1512 $cm^{-1}$ wavelength, as shown in FIG. 5.

It was certified that the peak intensity ratio of the peak intensity at about 1496 $cm^{-1}$ wavelength ($I_{1496}$) to the peak intensity at about 1508 $cm^{-1}$ wavelength ($I_{1508}$) in PAS spectrum had to do with electrical conductivity of polyaniline and the ratio is derived from the structural differences for highly conductive polyaniline through various examples. In other words, HCPANI synthesized in the preferred examples of the present invention had the peak intensity ratio, $I_{1496}$ / $I_{1508}$ of less than 1, and as the smaller the ratio, the larger electrical conductivity of polyaniline.

Fukukawa et al. reported that an infrared absorption peak at about 833 $cm^{-1}$ in PAS spectrum is assigned to the ring stretching vibration of para-substituted benzene ring in the repeating unit of polyaniline (Fukukawa et al., Macromolecules, 21, 1297 ~ 1305, 1988). In accordance with the present invention, it is certified that a peak intensity at around 833 $cm^{-1}$, between at about 760 $cm^{-1}$ and at about 875 $cm^{-1}$ in PAS spectrum is also closely related to electrical conductivity of synthesized polymers. For comparison of the relative area of the infrared absorption peak for each polymer sample, when the peak intensity at around 833 $cm^{-1}$ wavelength from about at 760 $cm^{-1}$ to 875 $cm^{-1}$ of each polymer sample is compared to the peak intensity at around 1500 $cm^{-1}$ wavelength, from at about 1475 $cm^{-1}$ to about 1535 $cm^{-1}$, as an internal standard in the preferred example of the present invention, HCPANI synthesized according to the preferred example of the present invention has the peak intensity ratio of $I_{833}$ / $I_{1500}$ is more than 3.5, for example 6.3, while PANI has the peak intensity ratio of $I_{833}$ / $I_{1500}$ is less than 3.0, for example 2.7. $I_{833}$ means the infrared absorption peak intensity at around 833 $cm^{-1}$, from at about 760 $cm^{-1}$ to at about 875 $cm^{-1}$ in PAS spectrum and $I_{1500}$ means the infrared absorbency peak intensity at around 1500 $cm^{-1}$, from at about 1475 $cm^{-1}$ to 1535 $cm^{-1}$ in PAS spectrum. Such analytical results indicate that HCPANI synthesized according to the present invention has much fewer ortho- couplings of aniline monomers in polymerization than conventional PANI, which corresponds to the analytic results of $^{13}C$ CPMAS NMR spectra above. HCPANI synthesized in other examples of the present invention has the peak intensity ratio, $I_{833}$ / $I_{1500}$, of more than 3.5.

Besides, HCPANI has characteristic spectrum in Raman spectroscopy analysis. FIGS. 6 and 7 show respectively the spectrum (Raman line) resulted from Raman spectroscopy analysis for each highly conductive polyaniline (HCPANI) synthesized according to a preferred example of the present invention and polyaniline (PANI) produced according to a conventional process. As shown the figures, HCPANI synthesized according to the present invention has different micro-chemical structure than PANI synthesized from the conventional method. HCPANI has discernable peak intensity at about 1376 $cm^{-1}$ in Raman spectroscopy, which is a characteristic peak of polyaniline of EB form according to Laska et al. (Laska et al., Synth. Met. 75, 69 ~ 74, 1995), compared to PANI.

More specifically, HCPANI synthesized according to the present invention has a relative absorbency , i.e. a peak intensity ratio in Raman spectroscopy, of more than 0.5, preferably 0.6, when comparing an area intensity from at about 1346 $cm^{-1}$ to about 1398 $cm^{-1}$ ($I_{1346-1398}$) in Raman spectroscopy, which are assigned to the ring stretching vibration of C-H in plane blending, to an area intensity from about at 1125 $cm^{-1}$ to about 1205 $cm^{-1}$ ($I_{1125-1205}$) in Raman spectroscopy, which absorbencies are independent of the Excitation Line and are assigned to the ring stretching vibration of C-H in plane blending. It is confirmed that the relative absorbency is closely related with electrical conductivity of polyaniline.

Moreover, HCPANI synthesized according to the present invention has well-defined micro-chemical structure compared to PANI synthesized from the conventional method as shown in FIGS. 8 to 10. FIG. 8 shows a spectrum resulted from $C^{13}$ NMR analysis for polyaniline substituted with tert-butoxycarbonyl (t-BOC) of the present invention, FIG. 9 shows a spectrum resulted from $C^{13}$ NMR analysis for commercially available polyaniline substituted with t-BOC (Ald-PANI). Also, FIGS. 10 and 11 show respectively a spectrum between 140 ppm and 110 ppm and 165 ppm and 135 ppm resulted from $C^{13}$ NMR analysis for t-BOC substituted polyaniline (PANI) according to a conventional process.

As shown in FIG. 8, HCPANI synthesized according to the present invention has well-defined micro-chemical structure with the following solution state $^{13}C$ NMR spectrum characteristics compared to two types of PANI commercially available and synthesized from the conventional method as shown in FIGS. 9 to 11. The micro-chemical structure was investigated for polyaniline derivative prepared by substituting with tert-butoxycarbonyl (t-BOC) to enhance solubility in common organic NMR solvents such as $CDCl_3$. These soluble polyaniline derivatives are designated HCPANI-tBOC, ALD-PANI-tBOC, and PANI-tBOC for polyaniline of the present invention, commercially available polyaniline from Aldrich Inc., and conventional method, respectively.

HCPANI-tBOC produced according to the present invention has characteristic peak formations in solution state $^{13}C$ NMR spectrum compared to ALD-PANI-tBOC or PANI-tBOC, which means that the HCPANI of the present invention has different micro-chemical structure from the conventional PANI. First of all, HCPANI-tBOC of the present invention has four major distinguishable peaks between at about 139.5 ppm of chemical shift and at about 160 ppm

of chemical shift in solution state $^{13}C$ NMR spectrum. On the other hand, ALD-PANI-tBOC and conventional PANI-tBOC shows much unidentifiable or irregular peaks in such chemical shifts solution state $^{13}C$ NMR spectrum. The peaks between at about 139.5 ppm and at about 165 ppm of chemical shift solution state $^{13}C$ NMR spectrum corresponds to para-linked polyaniline. Therefore, it is certified that HCPANI of the present invention is linked through para positions and has much enhanced linearity compared to conventional PANI.

Also, HCPANI-tBOC of the present invention has no identifiable peaks below 110 ppm of chemical shift and between at about 130 ppm and at about 135 ppm of chemical shift solution state $^{13}C$ NMR spectrum. The peaks below 110 ppm of chemical shift and between at about 130 ppm and at about 135 ppm of chemical shift solution state $^{13}C$ NMR spectrum are associated with meta-linked or other branched polyaniline. Accordingly, it is determined that HCPANI synthesized according to the present invention is not branched.

Besides, HCPANI-tBOC of the present invention has very weak or negligible peaks between at about 149 ppm and at about 152 ppm of chemical shift solution state $^{13}C$ NMR spectrum. In other words, HCPANI-tBOC shows no discernable peaks in such chemical shifts solution state $^{13}C$ NMR spectrum. On the other hand, ALD-PANI-tBOC and PANI-tBOC shows discernable peaks in such chemical shifts. The peaks between at about 149 ppm and at about 152 ppm are closely associated with side reactions which resulted in branched polyaniline.

Further, HCPANI-tBOC of the present invention has no more than 10 peaks between at about 117 ppm and at about 139 ppm of chemical shifts in solution state $^{13}C$ NMR spectrum. On the other hand, conventional PANI-tBOC shows at least 13 peaks and ALD-PANI-tBOC shows much more peaks between such chemical shifts in solution state $^{13}C$ NMR spectrum. The peaks between at about 117 ppm and at about 139 ppm of chemical shifts in solution state $^{13}C$ NMR spectrum corresponds to protonated carbons of the benzenoid ring and the quinoid ring of the repeating unit of polyaniline. Therefore, it is characterized that HCPANI-tBOC of the present invention has no more than 10 peaks corresponding to chemical shifts associated with protonated carbons of benzenoid and quinoid rings.

Moreover, HCPANI-tBOC of the present invention has very weak or negligible peaks between at about 123 ppm and at about 124 ppm of chemical shifts in solution state $^{13}C$ NMR spectrum. HCPANI-tBOC has the peak intensity between at about 123 ppm and at about 124 ppm of chemical shifts is equal to or less than of 0.2 the peak intensity at about 124 ppm of chemical shift in solution state $^{13}C$ NMR spectrum. On the other hand, the PANI-tBOC has a peak intensity between at about 123 ppm and at about 124 ppm of chemical shifts is equal to or a bit less than of a peak intensity at about 125 ppm of chemical shift in solution state $^{13}C$ NMR spectrum. Further, it is characterized that HCPANI-tBOC has no more than 2 side peaks within a distance of 1 ppm from the peak centers at about 136 ppm and at about 138 ppm of chemical shifts in solution state $^{13}C$ NMR spectrum.

Further, the present invention provides a process for synthesizing a polyaniline that has highly enhanced electrical conductivity. HCPANI of the present invention may be synthesized by mixing aniline monomers in an acid with an organic solvent to prepare aniline mixture solution, and adding an oxidizing agent dissolved in a protonic acid into the aniline mixture solution to synthesize an aniline polymer doped with the protonic acid. The doped aniline polymer may be dedoped with a base.

The acid used in the present invention may be a protonic acid, and more preferably an inorganic acid, for example, hydrochloric acid, nitric acid, sulfuric acid, phosphoric acid, hydrofluoric acid, or hydroiodic acid, and most preferably selected from the group consisting of hydrochloric acid, nitric acid, sulfuric acid, or phosphoric acid.

Besides, the protonic acid during polymerization step may be an inorganic acid, which may be selected from the group consisting of hydrochloric acid, nitric acid, sulfuric acid, phosphoric acid, hydrofluoric acid, or hydroiodic acid. Further, the protonic acid may be organic acids which comprise aliphatic sulfonic acid, aromatic (aryl) sulfonic acid, halogenated sulfonic acid or aliphatic carboxylic acid. Preferably, the organic acid may be selected from the group consisting of alkyl sulfonic acid such as methyl sulfonic acid, aromatic or aryl sulfonic acid such as para-toluene sulfonic acid, dodecyl benzene sulfonic acid, anthraquinone-2-sulfonic acid, 5-sulfonsalicylic acid, or camphor sulfonic acid, or halogenated sulfonic acid such as chlorinated sulfonic acid, trifluoro-sulfonic acid. Particularly, the protonic acids may be inorganic acid such as hydrochloric acid, nitric acid, sulfuric acid, or phosphoric acid.

In addition, the organic solvent of the process may comprise aliphatic hydrocarbons, which are unsubstituted or substituted with hydroxyl, or halogen, oxygen or carboxyl group, alicyclic solvents unsubstituted or substituted with heteroatom, or aromatic solvents. Specifically, the organic solvent may be aliphatic halide such as pentachloro ethane, 1,1,2,2-tetrachloro ethane, trichloro ethane, trichloro ethylene, dichloro methane, chloroform, ethyl bromide, ethyl chloride, dichloro propane, trichloro ethane, alcohols such as isopropyl alcohol, 2-methoxy ethanol, 2-butoxy ethanol, 1-butanol, 1-pentanol, iso-butanol, hexanol, for example ethyl hexanol, octanol, for example 1-octanol, decanol, dodecanol, or cyclohexanol. Also, the organic solvent may be ethers, for example 1,4-dioxane, dichloro ethyl ether, ethylene glycol monoethyl ether, diethylene glycol monoethyl ether or diethylene glycol monobutyl ether, ketones, for example 4-methyl-2-pentanon or methyl ethyl ketone, aromatic solvents, for example toluene, xylene, 1,2-dichloro benzene or nitrobenzene, alicyclic compounds unsubstituted or substituted with hetero atoms such as nitrogen or oxygen, for example tetrahydrofuran or N-methyl2-pyrolidone, dimethyl sulfoxide, N,N-dimethylformainide, or mixtures thereof.

The oxidizing agents of the present invention may comprise ammonium persulfate, hydrogen peroxide, or

manganese dioxide, potassium dichromate, potassium iodate, ferric chloride, potassium permanganate, potassium bromate, potassium chlorate, or mixtures thereof. Preferably, the oxidizing agent is ammonium persulfate, hydrogen peroxide, or manganese dioxide. Preferably, the base in dedoping polyaniline may be ammonium hydroxide or its equivalents.

Further, the polymerization reaction may be performed in the temperature of between about -45 °C to about 45°C, preferably between about -45 °C to about 5 °C, more preferably between -40 °C to about 5 °C in synthesizing polyaniline by reacting the oxidizing agent dissolved in the protonic acid with the aniline mixture solution.

## EXAMPLES

The present invention will be explained in more detail through the following nonlimiting examples.

### Measurement of Electrical Conductivity

Electrical conductivity of polymers synthesized in the following examples are measured with commonly used four line probe method at room temperature in the condition of relative humidity of about 50%. Carbon paste was used for preventing the polymers from corroding in case of contacting gold wires. The electrical conductivity of film samples with thickness of about 1 ~ 100 μ*m* (micron) (sample thickness: t, sample width: w) was measured by calculating voltages (*V*), currents (i), and distances (*l*) between 2 internal electrodes and 2 external electrodes connected to the samples with Keithley instruments.

Electrical conductivity was calculated by following equation (S/cm or Simen/cm). Electrical conductivity was measured with *Van der Pauw* method, which uses standard four point probe, in order to certify the homogeneity in electrical conductivity of the samples. The 4-point measurement results were in the range within 5%.

$$\text{Electrical Conductivity} = (l \cdot i) / (w \cdot t \cdot v)$$

It is generally known that a lot factors have affect on electrical conductivity of polyaniline. The electrical conductivity of polyaniline was measured by doping polyaniline with camphor sulfonic acid (CSA) dissolved in meta-cresol (molar equivalent of 1:2) to manufacture film sample or by changing polyaniline powders obtained from the reaction vessel into pellets.

### Example 1: Preparation of Highly Conductive Polyaniline (HCPANI)

In this example, highly conductive polyaniline (HCPANI) as emeraldine base (EB) was prepared. 100 mL of distilled and purified aniline was added slowly into 6L of 1M HCl and then 4L of chloroform was mixed with the solution. The mixed solution was maintained in the temperature of -30 °C. Solution of 56 g of ammonium persulfate ($(NH_4)_2S_2O_8$), as oxidizing agent, dissolved in 2L of 1M HCl was added slowly dropwise into the above mixed solution for 40 minutes with stirring to initiate polymerization reaction. After 3 hours, the polymerization reaction was completed to form precipitate. The obtained precipitate was filtered with filter paper and washed with 1L of 1M ammonium hydroxide ($NH_4OH$). The precipitate was transferred into 5L aqueous solution of 0.1 M ammonium hydroxide, stirred for 20 hours, washed with water, and then dried with vacuum pump for 48 hours to yield 1.5 g of polyaniline of emeraldine base (EB).

The synthesized polymer is analyzed with infrared spectroscopy and $^{13}C$-NMR technology. It is determined that the polyaniline synthesized in this example has a peak at about 1590 $cm^{-1}$, which is assigned to the ring stretching vibration of typical quinoid ring of polyaniline, a peak at about 1495 $cm^{-1}$, which is assigned to the ring stretching vibration of typical benzenoid ring of polyaniline, and a peak at about 3010 $cm^{-1}$, which is assigned to the ring stretching vibration of C-H of aromatic ring, in infrared spectroscopy spectrum (results not shown). Also, it is analyzed that the polyaniline has chemical shifts at about 137 ppm and about 141ppm in $^{13}C$ NMR spectrum, which are typical peaks of polyaniline.

### Examples 2 ~ 4: Preparation of Highly Conductive Polyaniline

The procedures and conditions were repeated as example 1, except that the reaction temperature between anline solution and ammonium sulfate were performed respectively at 0 °C for 2 hours, at -10 °C for 4 hours, and at -20 °C for 6 hours. It is certified that each of obtained materials is polyaniline of EB form with infrared spectroscopy and NMR technology.

**Comparative Example 1**

**Preparation of Polyaniline (PANI) by Conventional Method**

Polyaniline of emeraldine base (EB) was prepared according to conventional method in this example. Solution of 10 mL of distilled and purified aniline dissolved in 600 mL of HCl was introduced into Erlenmeyer flask. Solution of 5.6 g of ammonium persulfate dissolved in 200 mL of 1M HCl was added at 0 °C slowly dropwise into the flask for 15 minutes with stirring to form polyaniline. After 2 hours, the polymerization reaction was completed to obtain precipitate. The obtained precipitate was filtered with filter paper and washed with 100 mL of ammonium hydroxide. The washed precipitate was transferred to 500 mL solution of 0.1 M ammonium hydroxide, stirred for 20 hours, filtered, and dried with vacuum pump for 48 hours to yield 1.5 g of polyaniline of emeraldine base.

It is certified that the synthesized polymers were polyaniline as EB form with infrared spectroscopy and NMR analysis (result not shown).

**Comparative Examples 2~4: Preparation of Polyaniline**

The procedures and conditions were repeated as comparative example 1, except that the reaction temperature between anline solution and ammonium sulfate were performed respectively at -5 °C for 4 hours, at -10 °C for 10 hours, and at -15 °C for 17 hours. It is certified that each of obtained materials is polyaniline of EB form with infrared spectroscopy and NMR technology.

**Example 5: Measurement of Intrinsic Viscosity of Polyaniline**

HCPANI of emeraldine base form synthesized in examples 1 to 4 and PANI of emeraldine base from synthesized in comparative examples 1 to 4 were dedoped with ammonium hydroxide, dissolved in strong sulfuric acid. And then intrinsic viscosity (η) of HCPANI and PANI were determined at 30 °C. Table 1 shows the results of intrinsic viscosity for HCPANI and PANI. It is certified that all the synthetic compounds were polymers from measuring the intrinsic viscosity.

**Example 6: Measurement of Optical Properties of Polyaniline**

HCPANI of solid powder synthesized in example 1 and PANI of solid powder synthesized in comparative example 1 were analyzed with $^{13}C$ CPMAS-NMR technology, PAS spectrum, and Raman spectroscopy. $^{13}C$ CMPAS-NMR was measured at 100.6 MHz and spinning rate 7 KHz in tetramethyl silane (TMS) as standard with Bruker NMR instrument. PAS spectrum was measured in helium with infrared spectrometer (Magna 550 PAS detector). Raman spectrum was obtained by exciting with a light of wavelength of 1.08 $\mu m$ and a laser intensity of 10 $mV$ with Bruker instrument (RFS-100S). Table 1 shows optical properties of HCPANI and PANI measured in this example.

FIG. 2 shows a $^{13}C$ CPMAS NMR analysis result of HCPANI synthesized in Example 1. FIG. 3 shows a $^{13}C$ CPMAS NMR analysis result of PANI synthesized in Comparative Example 1. FIG. 4 shows a PAS analysis result of HCPANI synthesized in Example 1. FIG. 5 shows a PAS analysis result of PANI synthesized in Comparative Example 1. FIG. 6 shows a Raman spectroscopy analysis result of HCPANI synthesized in Example 1. FIG. 7 shows a Raman polarization analysis result of PANI synthesized in Comparative Example 1.

As shown in FIG. 2, HCPANI according to example 1 has 2 remarkably distinguishable peaks at around 140 ppm of chemical shift, at about 138 ppm and at about 143 ppm, in $^{13}C$ CPMAS NMR spectrum. Also, the peak intensity at about 138 ppm of chemical shift ($I_{138}$) is higher than the peak intensity at about 143 ppm of chemical shift ($I_{143}$). Besides, HCPANI of the present invention had a single peak at about 123 ppm of chemical shift and at about 158 ppm of chemical shift.

Also, HCPANI has a peak intensity ratio, $I_{1496}$ / $I_{1508}$, of equal to or less than 1 in a PAS spectrum, wherein $I_{1496}$ represents the peak intensity at wave length of about 1496 $cm^{-1}$ in the PAS spectrum and $I_{1508}$ represent the peak intensity at wave length of about 1508 $cm^{-1}$ in the PAS spectrum. Also, HCPANI has a peak intensity ratio, $I_{833}$ / $I_{1508}$, of equal to or more than 3.5 in a PAS spectrum, wherein $I_{833}$ represents a peak intensity at wave lengths between about 760 $cm^{-1}$ and about 875 $cm^{-1}$ in the PAS spectrum and $I_{1508}$ represents a peak intensity at wave lengths between about 1475 $cm^{-1}$ and about 1535 $cm^{-1}$ in the PAS spectrum. (FIG. 4)

Besides, it is determined that HCPANI has a Raman line intensity ratio, $I_{1345\text{-}1398}$ / $I_{1125\text{-}1205}$, of equal to or more than 0.6, wherein $I_{1346\text{-}1398}$ represents the Raman line intensity of a ring stretching vibration appearing at wave number between about 1346 $cm^{-1}$ and about 1398 $cm^{-1}$ and $I_{1125\text{-}1205}$ represents the Raman line intensity of a ring stretching vibration appearing at wave number between about 1125 $cm^{-1}$ and about 1205 $cm^{-1}$ (FIG. 6), while PANI synthesized in comparative example according to conventional method has a Raman line intensity ratio, $I_{1346\text{-}1398}$ /

$I_{1125-1205}$, of less than 0.5 (FIG. 7)

**Example 7: Measurement of Optical Properties of Polyaniline**

HCPANI of solid powder synthesized in Examples 2 to 4 and PANI of solid powder synthesized in comparative examples 2 to 4 were analyzed with $^{13}C$ CPMAS-NMR technology, PAS spectrum, and Raman spectroscopy as the same procedures and conditions as example 6. Table 1 shows optical properties, i.e. $I_{138}$ / $I_{143}$ in $^{13}C$ CPMAS NMR spectrum, $I_{1508}$ / $I_{1496}$ and $I_{833}$ / $I_{1408}$ in PAS spectrum, and $I_{1345-1398}$ / $I_{1125-1205}$ in Raman Spectrum, of HCPANI and PANI measured in this example.

**Example 8: NMR Analysis of Polyaniline**

HCPANI synthesized according to Example 1, and PANI synthesized according to Comparative Example 1 along with commercially available polyaniline powders were analyzed by NMR in this Example. HCPANI salts of Example 2 to 4 and PANI salts of Comparative Example1 were dedoped to obtain emeraldine base powders. The two kinds of emeraldine base powders and the commercially available polyaniline powder (Aldrich, molecular weight Mw =10,000, herein after referred to as "Ald-PANI") were substituted with tert-butoxycarbonyl (t-BOC) to enhance solubility thereof for certifying their structures in solution state NMR analysis ($C^{13}$ NMR, Jeol YH400).

Introduction of t-BOC group into HCPANI or PANI or Ald-PANI was performed in accordance with literature (Lee et al., Macromolecules, 2004, 37, pp. 4070-4074). 4.0 g of each polyaniline powder and 13 mL of pyridine was added in 100 mL of N-methylpyrrolidinone (NMP), into which a solution comprising 9 g of di-tert-butyldicarbonate dissolved in 50 mL of NMP were added slowly at 80 °C. The mixed solution was stirred in nitrogen reflux for 3 hours to obtain product. The product was washed with methanol and dried to yield pale dark reddish powders.

Such powders were dissolved in $CDCl_3$, which is solvent of NMR, to obtain $C^{13}$ NMR spectra. FIG. 8 shows an NMR analysis result of HCPANI substituted with t-BOC of the present invention and FIG. 9 shows an NMR analysis result of conventional polyaniline (Ald-PANI) substituted with t-BOC. FIGS. 10 and 11 show respectively NMR analysis results of conventional polyaniline (PANI) substituted with t-BOC. As shown the figures, HCPANI-tBOC of the present invention had main distinguishable peaks between at about 138 ppm and at about 165 ppm of chemical shifts and very weak and negligible peaks at about 150 ppm of chemical shift in $C^{13}$ NMR spectrum, while Ald-PANI-t-BOC had multiple peaks between such ranges of chemical shift, especially at around 150 ppm of chemical shift in $C^{13}$ NMR spectrum. Besides, HCPANI-tBOC had very weak peaks at about 119 ppm and at about 116 ppm of chemical shift in $C^{13}$ NMR spectrum, while Ald-PANI-tBOC had very strong peaks at about 119 ppm and at about 116 ppm of chemical shift in $C^{13}$ NMR spectrum.

More specifically, HCPANI substituted with tert-butoxycarbonyl (HCPANI-tBOC) has the following characteristic peak formations in solution state $^{13}C$ NMR spectra compared to conventional PANI substituted with tert-butoxycarbonyl.

HCPANI-tBOC had four distinguishable peaks between at about 139.5 ppm and at about 160 ppm of chemical shifts in solution state $^{13}C$ NMR spectrum. Also, HCPANI-tBOC showed no identifiable peaks below 110 ppm and between at about 130 ppm and at about 135 ppm of chemical shifts in solution state $^{13}C$ NMR spectrum as shown in FIG. 8. The polyaniline had also very weak or negligible peaks between at about 149 ppm and at about 152 ppm of chemical shift in solution state $C^{13}$ NMR spectrum.

Besides, HCPANI substituted with tert-butoxycarbonyl had no more than 10 peaks corresponding to the chemical shifts associated with protonated carbons of the benzenoid and quinoid rings. The polyaniline had also very weak or negligible peaks between at about 123 ppm and at about 124 ppm with intensities less than 1/5 of the intensity of the peak at about 125 ppm of chemical shift in solution state $C^{13}$ NMR spectrum in FIG. 8 Also, it was confirmed that the polyaniline had no more than 2 peaks within a distance of 1ppm from the center of the two peaks at about 136 ppm and at about 138 ppm of chemical shift in solution state $C^{13}$ NMR spectrum.

**Example 9: Measurement of Electrical Conductivity of Polyaniline**

In this example, electrical conductivity of HCPANI synthesized in examples 1 to 4 and PANI synthesized in comparative examples 1 to 4 as pellets were measured as described above. It is determined that HCPANI synthesized in examples 1 to 4 has electrical conductivity of 16~28 S/cm, while PANI synthesized in comparative examples 1 to 4 has electrical conductivity of 2~5 S/cm.

**Example 10: Measurement of Electrical Conductivity of Polyaniline**

In this example, HCPANI synthesized in examples 1 to 4 and PANI synthesized in comparative examples 5

were dedoped to measure electrical conductivity thereof. 1.5 g of camphor sulfonic acid (CSA) was mixed with respective 1.23 g of HCPANI and PANI (molar equivalent of 1:2). The mixtures are dissolved in meta-cresol with concentration of 2 % (w/w) and solution was prepared by sonication for 2 hours. 0.5 mL of the solution was casted on slide glass and dried at 50 °C to manufacture film samples with a thickness of 0.5 ~ 80 *μm.* Electrical conductivity was performed on 3 film samples manufactured from each polyaniline as mentioned above. Table 1 shows mean electrical conductivity measured on each polyaniline film.

Table 1:

| Physical Properties of Polyaniline | | | | | | | |
|---|---|---|---|---|---|---|---|
| Material | Example | Intrinsic Viscosity (dl/g) | CPMAS -NMR* | PAS** | PAS**** | Raman**** | Electrical conductivity |
| HCPANI | 1 | 2.7 | 1.2 | 1.1 | 602 | 1.4 | 720 |
| | 2 | 1.5 | 1.0 | 1.0 | 3.8 | 0.7 | 340 |
| | 3 | 2.2 | 1.1 | 1.0 | 4.5 | 0.9 | 580 |
| | 4 | 2.3 | 1.1 | 1.1 | 5.3 | 1.1 | 660 |
| PANI (comparative Example) | 1 | 0.8 | - | 0.7 | 2.1 | 0.50 | 90 |
| | 2 | 1.0 | - | 0.5 | 2.2 | 0.49 | 90 |
| | 3 | 1.0 | - | 0.6 | 2.3 | 0.53 | 110 |
| | 4 | 1.0 | - | 0.7 | 2.7 | 0.58 | 120 |

*: $I_{138}$ / $I_{143}$ in $^{13}C$ CPMAS NMR spectrum
**: $I_{1508}$ / $I_{1496}$ in PAS spectrum
***: $I_{833}$ / $I_{1508}$ in PAS spectrum
****: $I_{1345\sim1398}$ / $I_{1125\sim1205}$ in Raman line spectrum

It will be apparent to those skilled in the art that various modifications and variations can be made in the fabrication and application of the present invention without departing from the spirit or scope of the invention. Thus, it is intended that the present invention cover the modifications and variations of this invention provided they come within the scope of the appended claims and their equivalents.

**Claims**

1. A polyaniline having a repeat unit represented by the formula below, wherein the polyaniline has at least one single peak at about 123 ppm of chemical shift and at about 158 ppm of chemical shift in a $^{13}C$ CPMAS NMR spectrum and/or has identifiable peaks at around 140 ppm of chemical shift in a $^{13}C$ CPMAS NMR spectrum.

[Formula]

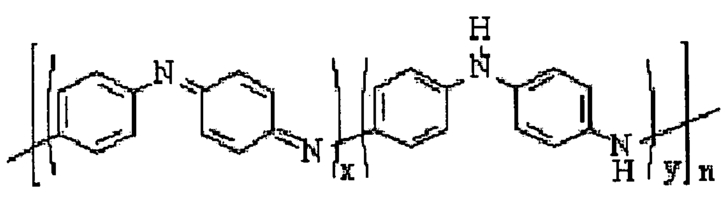

wherein x and y is respectively a molar fraction of a quinonediimine structural unit and phenylenediamine structural unit in the repeating unit, and 0 < x < 1, 0 < y < 1 and x + y = 1; and n is an integer of 2 or more.

2. The polyaniline according to claim 1, wherein the polyaniline forms peaks at about 138 ppm of chemical shift and at about 143 ppm of chemical shift in a $^{13}C$ CPMAS NMR spectrum.

**3.** The polyaniline according to claim 1, wherein the polyaniline has $I_{138}$ larger than $I_{143}$, wherein $I_{138}$ represents a peak intensity at about 138 ppm of chemical shift in the $^{13}C$ CPMAS NMR spectrum and $I_{143}$ represents a peak intensity at about 143 ppm of chemical shift in the $^{13}C$ CPMAS NMR spectrum.

**4.** The polyaniline according to claim 1, wherein the polyaniline has a peak intensity ratio, $I_{138}$ / $I_{143}$, of equal to or more than 1.2 in the $^{13}C$ CPMAS NMR spectrum.

**5.** The polyaniline according to claim 1, wherein the polyaniline has a peak intensity ratio, $I_{1496}$ / $I_{1508}$, of equal to or less than 1 in a PAS spectrum, wherein $I_{1496}$ represents a peak intensity at wave length of about 1496 $cm^{-1}$ in the PAS spectrum and $I_{1508}$ represent a peak intensity at wave length of about 1508 $cm^{-1}$ in the PAS spectrum.

**6.** The polyaniline according to claim 1, wherein the polyaniline has a peak intensity ratio, $I_{833}$ / $I_{1508}$, of equal to or more than 3.5 in a PAS spectrum, wherein $I_{833}$ represents a peak intensity at wave lengths between about 760 $cm^{-1}$ and about 875 $cm^{-1}$ in the PAS spectrum and $I_{1508}$ represents a peak intensity at wave lengths between about 1475 $cm^{-1}$ and about 1535 $cm^{-1}$ in the PAS spectrum.

**7.** The polyaniline according to claim 1, wherein the polyaniline has a Raman line intensity ratio, $I_{1346-1398}$ / $I_{1125-1205}$, of equal to or more than 0.6, wherein $I_{1346-1398}$ represents the Raman line intensity of a ring stretching vibration appearing at wave number between about 1346 $cm^{-1}$ and about 1398 $cm^{-1}$ and $I_{1125-1205}$ represents the Raman line intensity of a ring stretching vibration appearing at wave number between about 1125 $cm^{-1}$ and about 1205 $cm^{-1}$.

**8.** A polyaniline having a repeat unit represented by the formula below, wherein the polyaniline has a peak intensity ratio, $I_{1496}$ / $I_{1508}$, of equal to or less than 1 in a PAS spectrum, wherein $I_{1496}$ represents a peak intensity at wave length of about 1496 $cm^{-1}$ in the PAS spectrum and $I_{1508}$ represent a peak intensity at wave length of about 1508 $cm^{-1}$ in the PAS spectrum.

[Formula]

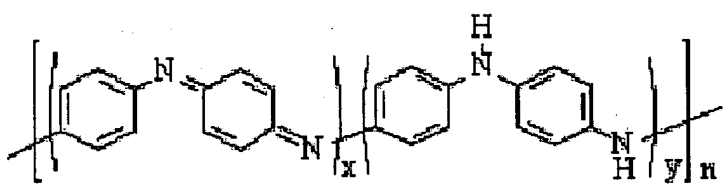

wherein x and y is respectively a molar fraction of a quinonediimine structural unit and phenylenediamine structural unit in the repeating unit, and $0 < x < 1$, $0 < y < 1$ and $x + y = 1$; and n is an integer of 2 or more.

**9.** The polyaniline according to claim 8, wherein the polyaniline has a peak intensity ratio, $I_{833}$ / $I_{1508}$, of equal to or more than 3.5 in a PAS spectrum, wherein $I_{833}$ represents a peak intensity at wave lengths between about 760 $cm^{-1}$ and about 875 $cm^{-1}$ in the PAS spectrum and $I_{1508}$ represents a peak intensity at wave lengths between about 1475 $cm^{-1}$ and about 1535 $cm^{-1}$ in the PAS spectrum.

**10.** The polyaniline according to claim 8, wherein the polyaniline has a Raman line intensity ratio, $I_{1346-1398}$ / $I_{1125-1205}$, of equal to or more than 0.6, wherein $I_{1346-1398}$ represents the Raman line intensity of a ring stretching vibration appearing at wave number between about 1346 $cm^{-1}$ and about 1398 $cm^{-1}$ and $I_{1125-1205}$ represents the Raman line intensity of a ring stretching vibration appearing at wave number between about 1125 $cm^{-1}$ and about 1205 $cm^{-1}$.

**11.** A polyaniline having a repeat unit represented by the formula below, wherein the polyaniline has a Raman line intensity ratio, $I_{1346-1398}$ / $I_{1125-1205}$, of equal to or more than 0.6, wherein $I_{1346-1398}$ represents the Raman line intensity of a ring stretching vibration appearing at wave number between about 1346 $cm^{-1}$ and about 1398 $cm^{-1}$ and $I_{1125-1205}$ represents the Raman line intensity of a ring stretching vibration appearing at wave number between about 1125 $cm^{-1}$ and about 1205 $cm^{-1}$.

[Formula]

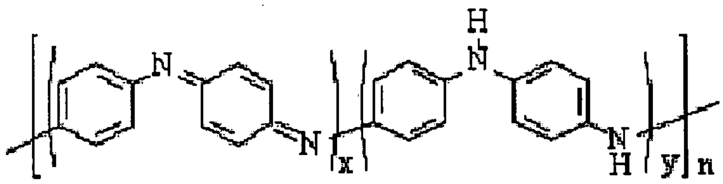

wherein x and y is respectively a molar fraction of a quinonediimine structural unit and phenylenediamine structural unit in the repeating unit, and 0 < x < 1, 0 < y < 1 and x + y = 1; and n is an integer of 2 or more.

**12.** A polyaniline having a repeat unit represented by the formula below, wherein the polyaniline has four major peaks between at about 139.5 ppm and at about 160 ppm of chemical shift in a solution state $^{13}$C NMR spectrum in case the polyaniline is substituted with tert-butoxycarbonyl.

[Formula]

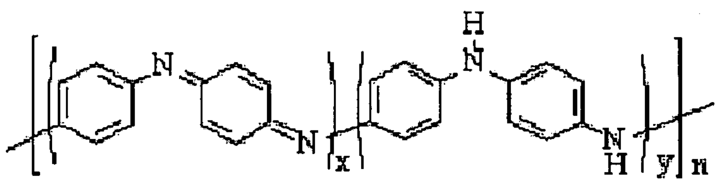

wherein x and y is respectively a molar fraction of a quinonediimine structural unit and phenylenediamine structural unit in the repeating unit, and 0 < x < 1, 0 < y < 1 and x + y = 1; and n is an integer of 2 or more.

**13.** The polyaniline according to claim 12, wherein the polyaniline has no discernable peaks below 110 ppm of chemical shift and between at about 130 ppm of chemical shift and about 135 ppm of chemical shift in the solution state $^{13}$C NMR spectrum.

**14.** The polyaniline according to claim 12, wherein the polyaniline has weak or negligible peaks between at about 149 ppm of chemical shift and at about 152 ppm of chemical shift in the solution state $^{13}$C NMR spectrum.

**15.** The polyaniline according to claim 12, wherein the polyaniline has no more than 10 peaks corresponding to the chemical shift associated with protonated carbons of a benzenoid and quinoid rings in the solution state $^{13}$C NMR spectrum.

**16.** The polyaniline according to claim 12, wherein the polyaniline has a peak intensity ratio, $I_{123}$ / $I_{125}$, of equal to or less than 0.2 in the solution state $^{13}$C NMR spectrum, wherein $I_{123}$ represents a peak intensity between about 123 ppm and about 124 ppm of chemical shift in the solution state $^{13}$C NMR spectrum and $I_{125}$ represent a peak intensity at about 125 ppm of chemical shift in the solution state $^{13}$C NMR spectrum.

**17.** The polyaniline according to claim 12, wherein the polyaniline has no more than 2 side peaks within a distance of 1 ppm from a peak center at about 136 ppm of chemical shift and from a peak center at about 138 ppm of chemical shift in the solution state $^{13}$C NMR spectrum.

**18.** A process of producing polyaniline, the process comprising the steps of:

(a) mixing an aniline monomer and acid solution with an organic solvent;
(b) adding an oxidizing agent in a protonic acid into the acid solution to synthesize polyaniline doped with the protonic acid; and
(c) dedoping the polyaniline with a base.

**19.** The process according to claim 18, wherein the dedoped polyaniline has a structure represented by formula below.

[Formula]

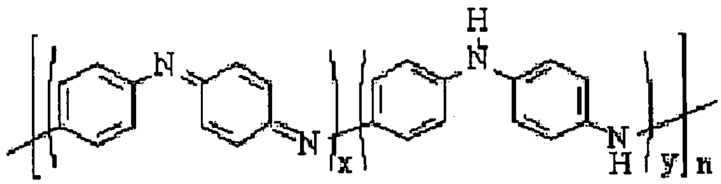

wherein x and y is respectively a molar fraction of a quinonediimine structural unit and phenylenediamine structural unit in the repeating unit, and 0 < x < l, 0 < y < 1 and x + y = 1; and n is an integer of 2 or more.

**20.** The process according to claim 18, wherein the polyaniline has at least one single peak at about 123 ppm of chemical shift and at about 158 ppm of chemical shift in a $^{13}C$ CPMAS NMR spectrum and/or has identifiable peaks at around 140 ppm of chemical shift in a $^{13}C$ CPMAS NMR spectrum.

**21.** The process according to claim 18, wherein the protonic acid is inorganic acid.

**22.** The process according to claim 21, wherein the inorganic acid is selected from the group consisting of hydrochloric acid, nitric acid, sulfuric acid, phosphoric acid, hydrofluoric acid, or hydroiodic acid.

**23.** The process according to claim 18, wherein the organic solvent comprises an aliphatic hydrocarbon unsubstituted or substituted with hydroxyl, halogen, oxygen or carboxyl group, an aromatic compound, or alicyclic compound.

**24.** The process according to claim 18, wherein the oxidizing agent comprises ammonium persulfate, hydrogen peroxide, manganese dioxide, potassium dichromate, potassium iodate, ferric chloride, potassium permanganate, potassium bromate, potassium chlorate, or mixtures thereof.

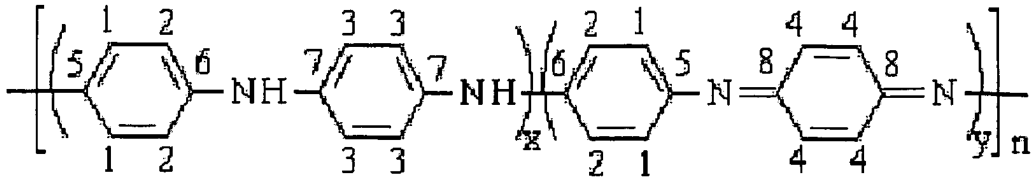

benzenoid ring
(phenylene diamine)

quinoid ring
(quinone diimine)

FIG. 1

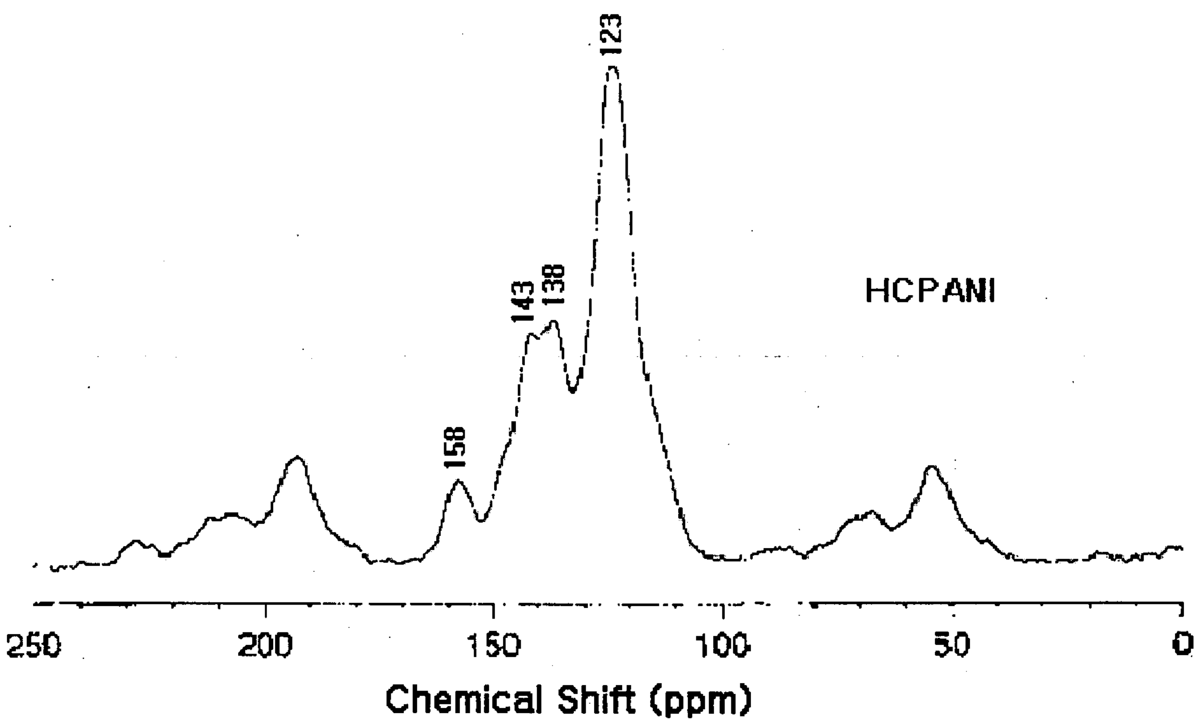


FIG. 2

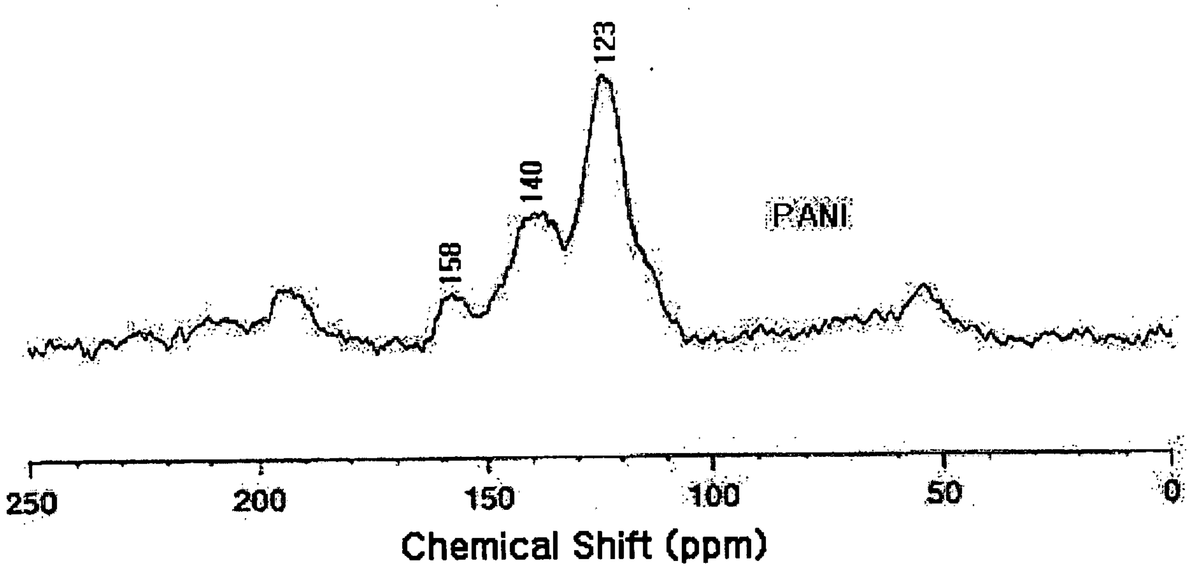


FIG. 3

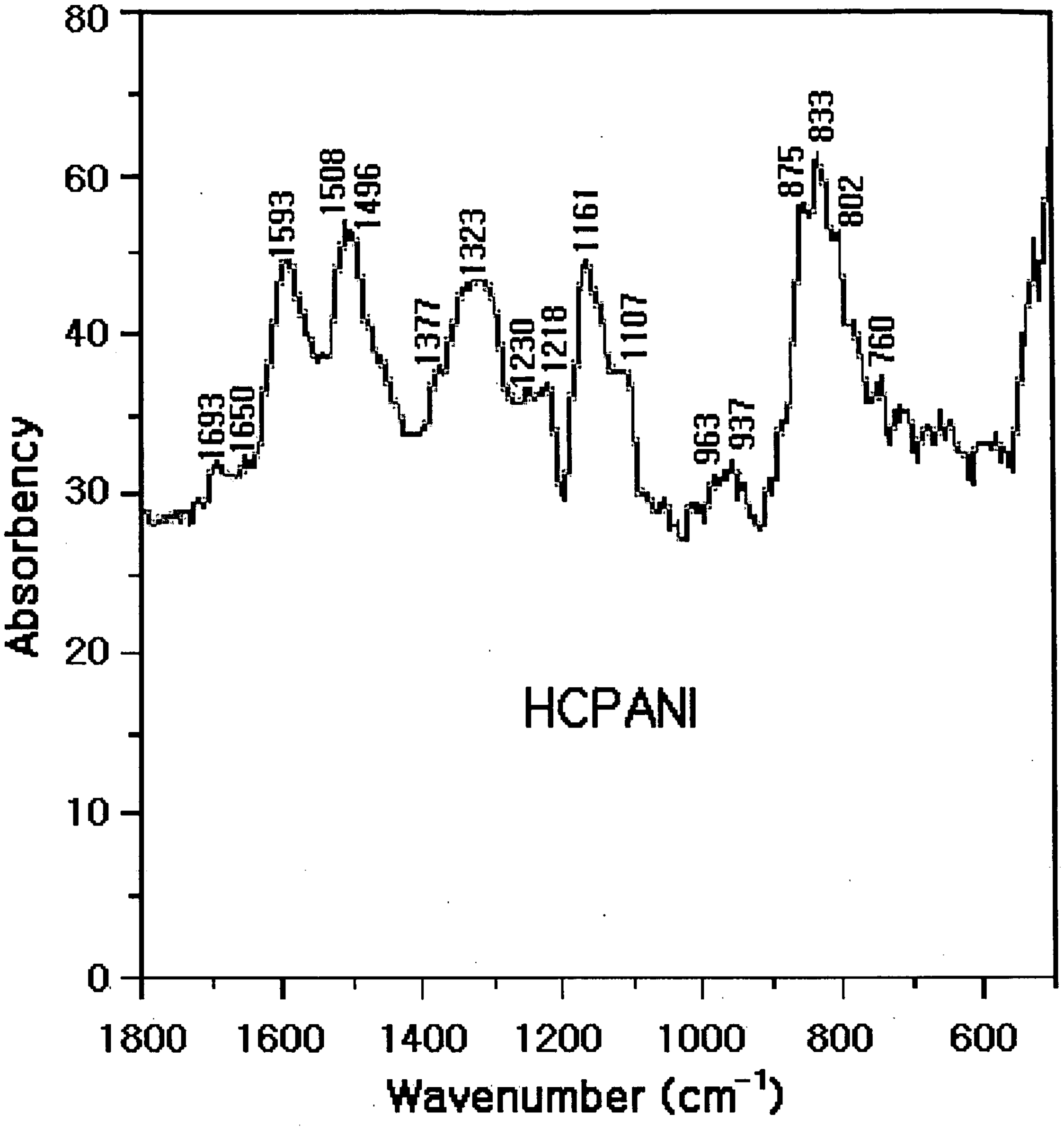
80
60
40
30
20
10
0
Absorbency
1693
1650
1593
1508
1496
1377
1323
1230
1218
1161
1107
963
937
875
833
802
760
HCPANI
1800
1600
1400
1200
1000
800
600
Wavenumber (cm⁻¹)

FIG. 4

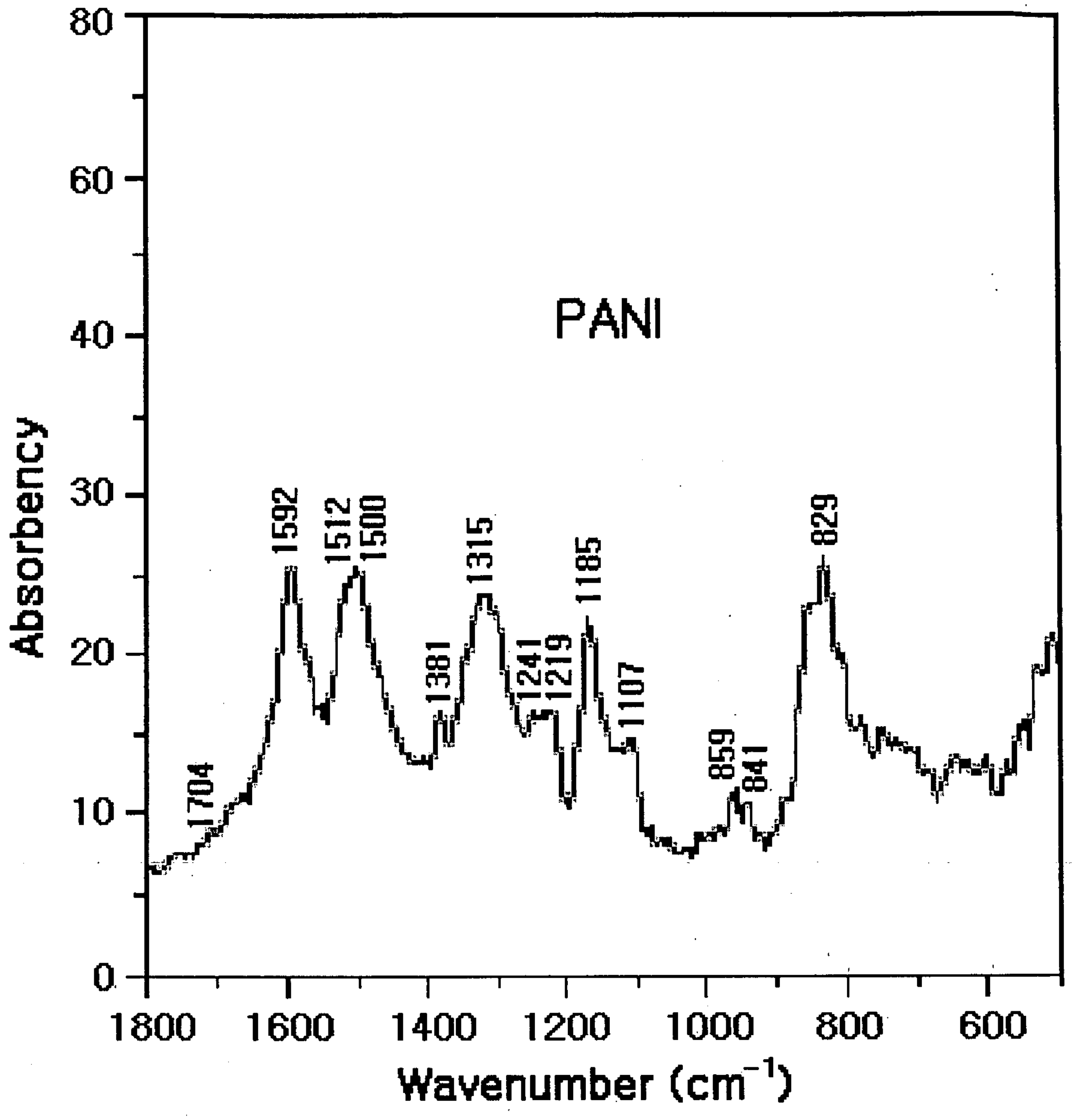
80
60
40
30
20
10
0
Absorbency
PANI
1704
1592
1512
1500
1381
1315
1241
1219
1185
1107
859
841
829
1800
1600
1400
1200
1000
800
600
Wavenumber ($cm^{-1}$)

FIG. 5

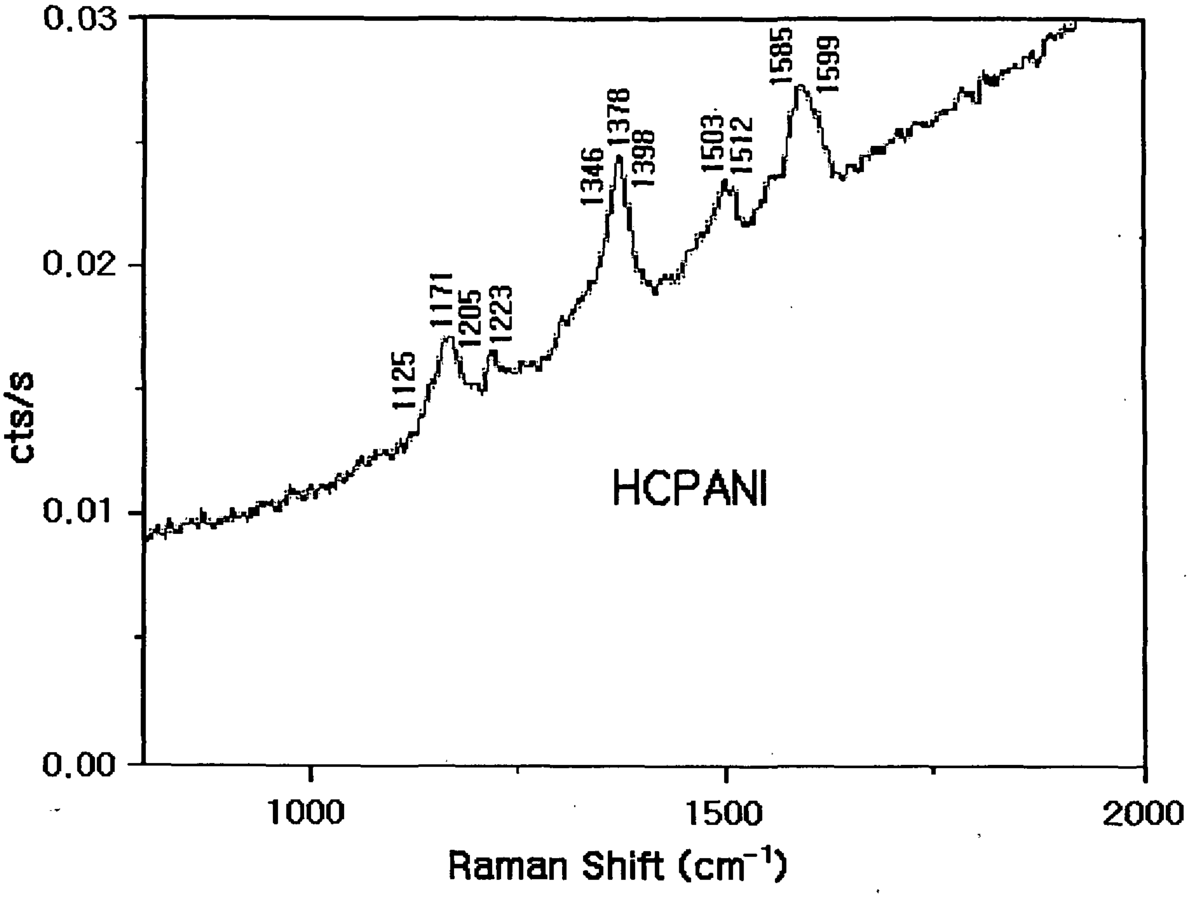
0.03
0.02
0.01
0.00
cts/s
1000
1500
2000
Raman Shift (cm$^{-1}$)
HCPANI
1125
1171
1205
1223
1346
1378
1398
1503
1512
1585
1599

FIG. 6

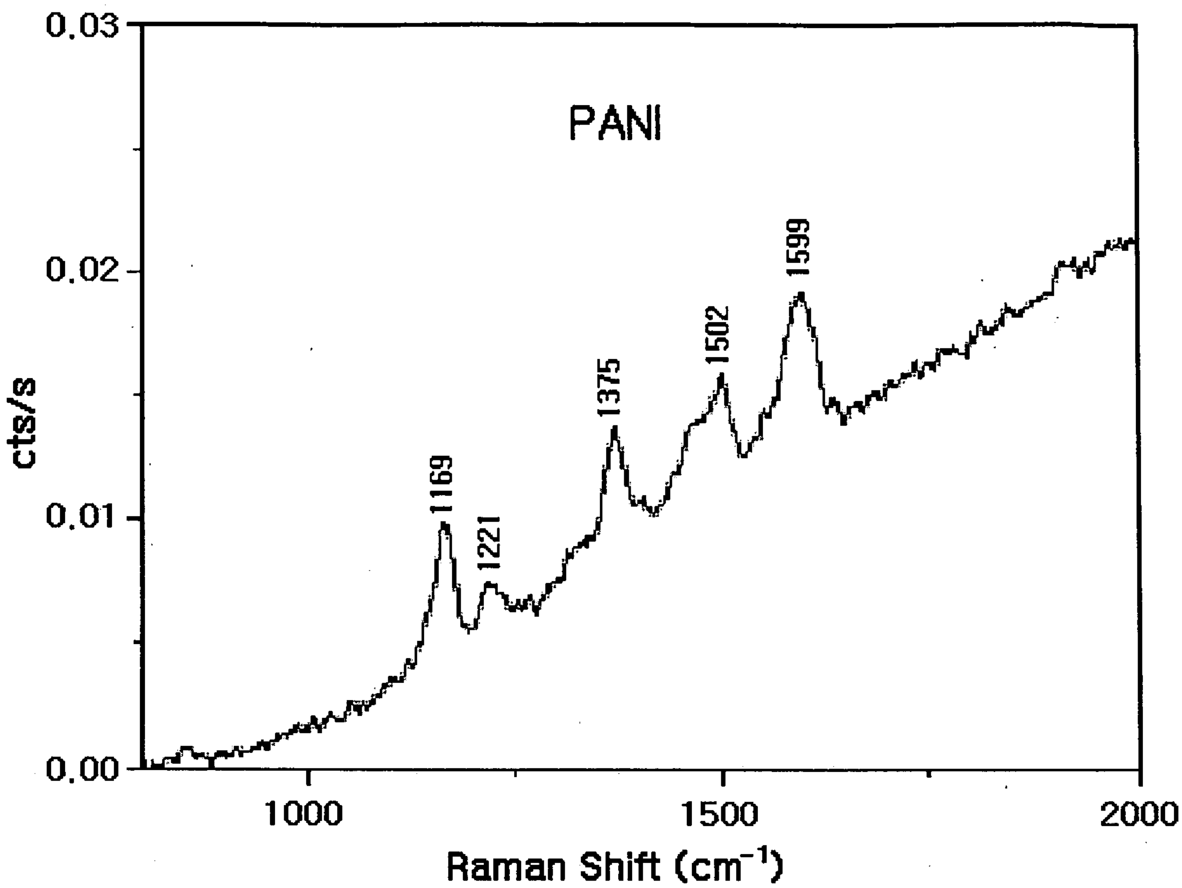
0.03
0.02
0.01
0.00
cts/s
PANI
1169
1221
1375
1502
1599
1000
1500
2000
Raman Shift (cm-1)

FIG.7

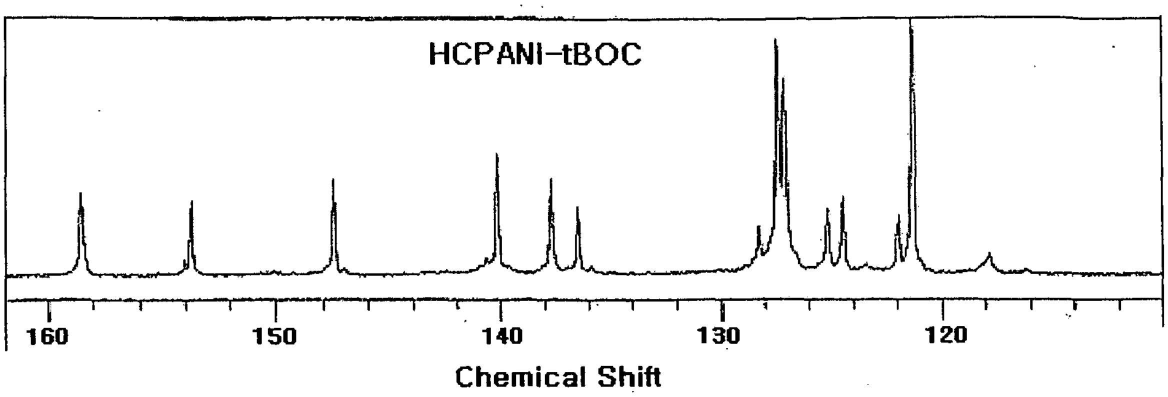
HCPANI-tBOC
160
150
140
130
120
Chemical Shift

FIG.8

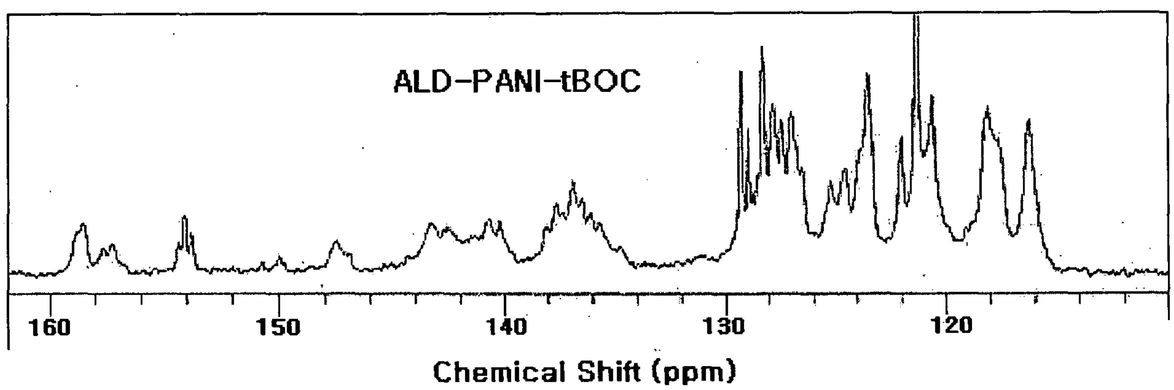
ALD-PANI-tBOC
160
150
140
130
120
Chemical Shift (ppm)

FIG.9

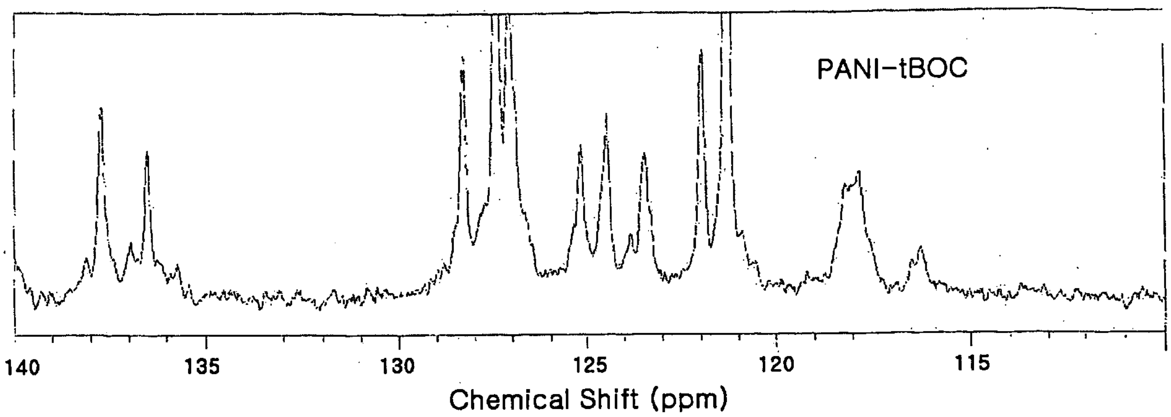
PANI-tBOC
140
135
130
125
120
115
Chemical Shift (ppm)

FIG.10

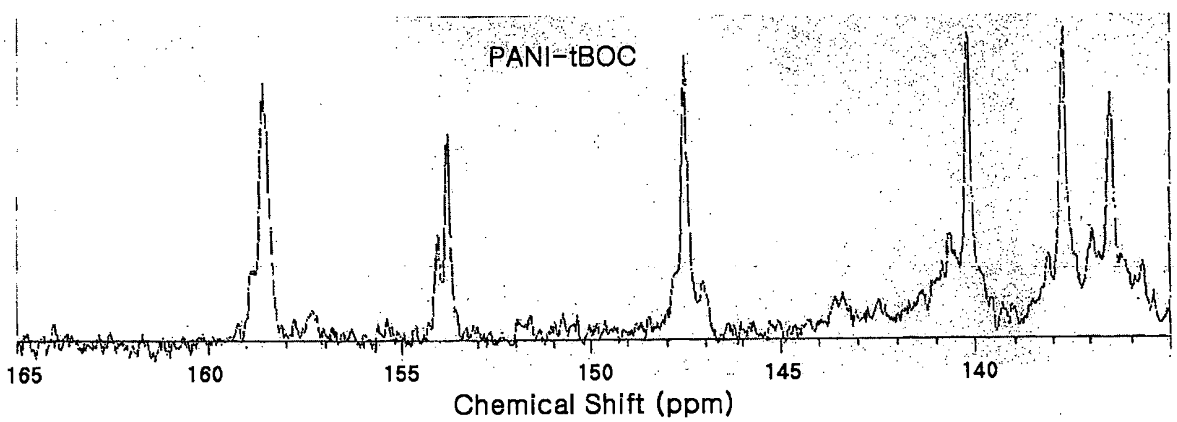
PANI-tBOC
165
160
155
150
145
140
Chemical Shift (ppm)

FIG.11

European Patent Office

# EUROPEAN SEARCH REPORT

Application Number
EP 05 00 6289

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,Y | CAO Y ET AL: "INFLUENCE OF CHEMICAL POLYMERIZATION CONDITIONS ON THE PROPERTIES OF POLYANILINE" POLYMER, JORDAN HILL, OXFORD, GB, vol. 30, 1 December 1989 (1989-12-01), pages 2305-2311, XP000575135 ISSN: 0032-3861 * page 2305 - page 2311; tables 1-10 * ----- | 1-24 | C08G73/02 |
| X,Y | KAPLAN S., CONWELL E.M., RICHTER A.F., MACDIARMID A.G.: "Solid-state 13C NMR characterization of polyanilines" JOURNAL OF THE AMERICAN CHEMICAL SOCIETY, vol. 110, 1988, pages 7647-7651, XP002332276 * page 7647 - page 7651; figures 1-5 * ----- | 1-24 | |
| Y | KIEBOOMS R ET AL: "SYNTHESIS, ELECTRICAL, AND OPTICAL PROPERTIES OF CONJUGATED POLYMERS" HANDBOOK OF ADVANCED ELECTRONIC AND PHOTONIC MATERIALS AND DEVICES, vol. 8, 2001, pages 1-102, XP001029240 * page 32, column 2 - page 33, column 2 * ----- | 1-24 | TECHNICAL FIELDS SEARCHED (Int.Cl.7) C08G |
| X | US 4 904 553 A (NAKAJIMA ET AL) 27 February 1990 (1990-02-27) * column 8, line 44 - column 10, line 6 * ----- | 1-24 | |
| X | US 5 276 112 A (MACDIARMID ET AL) 4 January 1994 (1994-01-04) * column 3, line 11 - column 6, line 27; claims 1-19; examples 1,2 * ----- | 1-24 | |
| X | US 5 519 111 A (MACDIARMID ET AL) 21 May 1996 (1996-05-21) * column 3, line 65 - column 6, line 13; claims 1-17; examples 1-3 * ----- -/-- | 1-24 | |

The present search report has been drawn up for all claims

3

| Place of search | Date of completion of the search | Examiner |
|---|---|---|
| Munich | 16 June 2005 | Kiebooms, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 05 00 6289

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 837 806 A (ADAMS ET AL) 17 November 1998 (1998-11-17) * column 2, line 33 - line 47; figures 1-13 * * column 3, line 16 - line 50; claims 1-10; examples 1-30 * ----- | 1-24 | |
| X | US 6 265 532 B1 (NICOLAU YANN-FLORENT ET AL) 24 July 2001 (2001-07-24) * column 3, line 45 - column 5, line 30 * * claims 1-19; examples 1-3 * ----- | 1-24 | |
| | | | TECHNICAL FIELDS SEARCHED (Int.Cl.7) |

The present search report has been drawn up for all claims

| Place of search | Date of completion of the search | Examiner |
|---|---|---|
| Munich | 16 June 2005 | Kiebooms, R |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 05 00 6289

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2005

| Patent document cited in search report | Publication date | Patent family member(s) | Publication date |
|---|---|---|---|
| US 4904553 A | 27-02-1990 | JP 63258936 A | 26-10-1988 |
| | | JP 63289765 A | 28-11-1988 |
| | | JP 63289766 A | 28-11-1988 |
| | | DE 3822357 A1 | 12-01-1989 |
| | | DE 3808985 A1 | 29-09-1988 |
| | | FR 2612695 A1 | 23-09-1988 |
| | | US 4906538 A | 06-03-1990 |
| | | JP 2000638 A | 05-01-1990 |
| US 5276112 A | 04-01-1994 | WO 9309175 A1 | 13-05-1993 |
| | | US 5519111 A | 21-05-1996 |
| US 5519111 A | 21-05-1996 | US 5276112 A | 04-01-1994 |
| | | WO 9309175 A1 | 13-05-1993 |
| US 5837806 A | 17-11-1998 | AT 175694 T | 15-01-1999 |
| | | AU 690639 B2 | 30-04-1998 |
| | | AU 1714895 A | 18-09-1995 |
| | | CA 2184608 A1 | 08-09-1995 |
| | | DE 69507285 D1 | 25-02-1999 |
| | | DE 69507285 T2 | 19-08-1999 |
| | | EP 0748347 A1 | 18-12-1996 |
| | | ES 2126883 T3 | 01-04-1999 |
| | | FI 963441 A | 31-10-1996 |
| | | WO 9523822 A1 | 08-09-1995 |
| | | GB 2287030 A ,B | 06-09-1995 |
| | | HK 1000770 A1 | 24-04-1998 |
| | | JP 9509695 T | 30-09-1997 |
| | | NZ 279887 A | 20-12-1996 |
| | | TW 378217 B | 01-01-2000 |
| | | ZA 9501589 A | 08-12-1995 |
| US 6265532 B1 | 24-07-2001 | FR 2767138 A1 | 12-02-1999 |
| | | DE 69806164 D1 | 25-07-2002 |
| | | DE 69806164 T2 | 09-01-2003 |
| | | EP 1002003 A1 | 24-05-2000 |
| | | WO 9907766 A1 | 18-02-1999 |
| | | JP 2001512758 T | 28-08-2001 |

EPO FORM P0459

For more details about this annex : see Official Journal of the European Patent Office, No. 12/82